# EUROPEAN PATENT APPLICATION

(11) **EP 4 212 384 A1**
(43) Date of publication of application: **19.07.2023**
(21) Application number: 22851617.5
(22) Date of filing: 21.04.2022
(51) Int. Cl.: B60L 58/12

(54) **CHARGING AND DISCHARGING CIRCUIT, CHARGING AND DISCHARGING SYSTEM, AND CHARGING AND DISCHARGING CONTROL METHOD**

(30) Priority: 05.08.2021 WO PCT/CN2021/110706
(71) Applicant: Contemporary Amperex Technology Co., Limited, Ningde, Fujian 352100 (CN)
(72) Inventor: HUANG, Xiaojian, Ningde, Fujian 352100 (CN); DAN, Zhimin, Ningde, Fujian 352100 (CN); PAN, Xianxi, Ningde, Fujian 352100 (CN); GAO, Jinfeng, Ningde, Fujian 352100 (CN)
(74) Representative: Behr, Wolfgang
(86) International application number: PCT/CN2022/088187
(87) International publication number: WO 2023/010894

(57) **Abstract**

This application provides a charge/discharge circuit, a charge/discharge system, and a charge/discharge control method. The charge/discharge circuit includes a power supply module, a switch module, an energy storage module, and a charge-discharge switching module. The switch module, the charge-discharge switching module, and the power supply module are connected in parallel. A first terminal of the energy storage module is connected to the switch module, and a second terminal of the energy storage module is connected to the charge-discharge switching module. The switch module and the charge-discharge switching module are configured to perform an action in response to a charge/discharge enable signal to produce an alternating current in the charge/discharge circuit. In the charge/discharge circuit of this application, the switch module and the charge-discharge switching module of the charge/discharge circuit can perform an action in response to the charge/discharge enable signal to produce an alternating current in the charge/discharge circuit, such that the alternating current produces heat in the power supply module, thereby heating the power supply module. This can effectively suppress noise caused by motor vibration and resolve the problem that the motor vibrates so much as to produce excessive noise during the heating in conventional traction battery heating technologies which use a motor loop to heat the traction battery.

## Description

### TECHNICAL FIELD

This application relates to the field of battery charging technologies, and in particular, to a charge/discharge circuit, a charge/discharge system, and a charge/discharge control method.

### BACKGROUND

With the development of new energy technologies, traction batteries are widely used in new energy vehicles, consumer electronics, energy storage systems, and other fields. Traction batteries have advantages such as high energy density, support of cyclic charging, safety, and environment friendliness. However, in low-temperature environments, use of traction batteries is limited. In particular, their discharge capacities severely degrade in low-temperature environments, and the traction batteries are unable to be charged in low-temperature environments. Therefore, for proper use of traction batteries, it is necessary to heat them up in low-temperature environments. For conventional traction battery heating technologies which use a motor loop to heat the traction battery, it is possible that the motor vibrates so much as to produce excessive noise during the heating.

### SUMMARY

In view of the preceding problems, this application provides a charge/discharge circuit, a charge/discharge system, and a charge/discharge control method, so as to resolve a problem that the motor vibrates so much as to produce excessive noise during the heating in conventional traction battery heating technologies which use a motor loop to heat the traction battery.

According to a first aspect, this application provides a charge/discharge circuit, including a power supply module, a switch module, an energy storage module, and a charge-discharge switching module, where
the switch module, the charge-discharge switching module, and the power supply module are connected in parallel;
a first terminal of the energy storage module is connected to the switch module, and a second terminal of the energy storage module is connected to the charge-discharge switching module; and
the switch module and the charge-discharge switching module are configured to perform an action in response to a charge/discharge enable signal to produce an alternating current in the charge/discharge circuit, where a waveform of the alternating current includes at least one of a triangular waveform, a quasi-triangular waveform, a sinusoidal waveform, and a quasi-sinusoidal waveform.

In the technical solution provided in the first aspect, the switch module and the charge-discharge switching module can perform an action in response to the charge/discharge enable signal to produce an alternating current in the charge/discharge circuit, such that the alternating current produces heat in the power supply module, thereby heating the power supply module. This can effectively suppress noise caused by motor vibration and resolve the problem that the motor vibrates so much as to produce excessive noise during the heating in conventional traction battery heating technologies which use a motor loop to heat the traction battery.

In some embodiments, the charge-discharge switching module includes a first switching circuit and a second switching circuit that are connected in series, where
a joint of the first switching circuit and the second switching circuit is connected to the second terminal of the energy storage module; and
the first switching circuit and the second switching circuit are configured to turn on or off according to the charge/discharge enable signal.

The first switching circuit and the second switching circuit can turn on or off under the trigger of the charge/discharge enable signal, and cooperate with the action of the switch module to form a corresponding charge/discharge loop so as to produce an alternating current in the charge/discharge circuit, such that the alternating current produces heat in the power supply module, thereby heating the power supply module.

In some embodiments, the first switching circuit includes an upper leg, and the second switching circuit includes a lower leg, where
a joint of the upper leg and the lower leg is connected to the second terminal of the energy storage module.

The upper leg and the lower leg of the charge-discharge switching module can turn on or off under the trigger of the charge/discharge enable signal, and cooperate with the action of the switch module to form a corresponding charge/discharge loop so as to produce an alternating current in the charge/discharge circuit.

In some embodiments, the upper leg includes a first switch and the lower leg includes a second switch; or
the upper leg includes a first switch and a first diode that are connected in parallel, and the lower leg includes a second switch and a second diode that are connected in parallel; where
a negative electrode of the first diode is connected to a positive electrode of the power supply module, a positive electrode of the first diode is connected to a negative electrode of the second diode, and a positive electrode of the second diode is connected to a negative electrode of the first battery group.

In some embodiments, the first switching circuit includes a third diode, and the second switching circuit includes a third switch, where a negative electrode of the third diode is connected to a positive electrode of the power supply module.

The third diode and the third switch constitute a charge-discharge switching module. With such a simple structure, costs are reduced, no active control for the third diode is required, and a control mode is simplified.

In some embodiments, the first switching circuit further includes a fourth switch, where the fourth switch is connected in series between the third diode and the positive electrode of the power supply module.

The fourth switch can make the on/off control mode of the first switching circuit more diversified and flexible, so as to be suitable for forming charge and discharge loops of more different topologies.

In some embodiments, the first switching circuit includes a fifth switch, and the second switching circuit includes a fourth diode, where a positive electrode of the fourth diode is connected to a negative electrode of the power supply module.

The fourth diode and the fifth switch constitute a charge-discharge switching module. With such a simple structure, costs are reduced, no active control for the fourth diode is required, and a control mode is simplified.

In some embodiments, the first switching circuit further includes a sixth switch, where the sixth switch is connected in series between the fourth diode and the negative electrode of the power supply module.

The sixth switch can make the on/off control mode of the second switching circuit more diversified and flexible, so as to be suitable for forming charge and discharge loops of more different topologies.

In some embodiments, the first switching circuit includes a fifth switch, the second switching circuit includes a fourth diode and a sixth switch, and a negative electrode of the fourth diode is connected to a negative electrode of the power supply module through the sixth switch.

In some embodiments, the energy storage module includes a first M-phase motor;
the switch module includes M phase leg circuits, where each phase leg circuit includes an upper leg and a lower leg that are connected in series;
M joints between upper legs and lower legs of the M phase leg circuits are connected to M phase windings of the first M-phase motor in one-to-one correspondence; and
the charge-discharge switching module is connected to a neutral point of the first M-phase motor.

Three phase windings of the first M-phase motor are configured to store electrical energy, that is, to absorb and store the electric energy discharged by the power supply module in the discharge circuit.

In some embodiments, the energy storage module further includes at least one energy storage component connected in series between the neutral point of the first M-phase motor and the charge-discharge switching module.

The energy storage component assists in storing the electric energy discharged by the power supply module to absorb and store more electric energy discharged by the power supply module in the discharge circuit, and in increasing a charge current for the power supply module in the charge circuit, thus improving heating efficiency of the power supply module.

In some embodiments, the at least one energy storage component includes a second M-phase motor, where the neutral point of the first M-phase motor is connected to a neutral point of the second M-phase motor;
the first switching circuit includes M upper legs of M phase leg circuits, and the second switching circuit includes M lower legs of the M phase leg circuits, where the M upper legs are connected to the M lower legs in one-to-one correspondence; and
M joints between upper legs and lower legs of the charge-discharge switching module are connected to M windings of the second M-phase motor in one-to-one correspondence.

The second M-phase motor assists in storing the electric energy discharged by the power supply module to absorb and store more electric energy discharged by the power supply module in the discharge circuit, and in increasing a charge current for the power supply module in the charge process, thus improving heating efficiency.

In some embodiments, the at least one energy storage component includes an inductor and/or a capacitor connected in series between the neutral point of the first M-phase motor and the charge-discharge switching module.

The inductor or capacitor assists in storing the electric energy discharged by the power supply module to absorb and store more electric energy discharged by the power supply module in the discharge circuit, and in increasing a charge current for the power supply module in the charge process, thus improving heating efficiency.

In some embodiments, the power supply module includes at least one battery group.

In some embodiments, a capacitor is connected in parallel to a battery group in the power supply module.

The capacitor can stabilize voltage and filter clutter.

In some embodiments, a capacitor is connected in parallel to the charge-discharge switching module. The capacitor can stabilize voltage and filter clutter.

According to a second aspect, this application provides a charge/discharge system, including a control module and the charge/discharge circuit according to the first aspect, where
the control module is configured to send a charge/discharge enable signal to the charge/discharge circuit to control charge/discharge of the power supply module.

The technical solution of the charge/discharge system provided in the second aspect includes the charge/discharge circuit in the first aspect, the switch module and the charge-discharge switching module can perform an action in response to the charge/discharge enable signal sent by the control module to produce an alternating current in the charge/discharge circuit, such that the alternating current produces heat in the power supply module, thereby heating the power supply module. This can effectively suppress noise caused by motor vibration and resolve the problem that the motor vibrates so much as to produce excessive noise during the heating in conventional traction battery heating technologies which use a motor loop to heat the traction battery.

In some embodiments, the charge/discharge system further includes a charge apparatus connected to the charge/discharge circuit, where
the charge apparatus is configured to charge a battery group in the power supply module through the charge/discharge circuit.

The charge apparatus charges the battery group in the power supply module, which can accelerate the heating rate of the battery group of the power supply module.

According to a third aspect, this application provides a charge/discharge control method, applied to the charge/discharge system according to the second aspect; where the method includes:
sending a charge/discharge enable signal such that the switch module and the charge-discharge switching module perform an action to form alternately switching charge loop and discharge loop in the charge/discharge circuit, where the charge loop and the discharge loop produce an alternating current, and a waveform of the alternating current includes at least one of a triangular waveform, a quasi-triangular waveform, a sinusoidal waveform, and a quasi-sinusoidal waveform.

The technical solution provided in the third aspect is applied to the charge/discharge system according to the second aspect, the switch module and the charge-discharge switching module perform an action in response to the charge/discharge enable signal sent by the control module to produce an alternating current in the charge/discharge circuit, such that the alternating current produces heat in the power supply module, thereby heating the power supply module. This can effectively suppress noise caused by motor vibration and resolve the problem that the motor vibrates so much as to produce excessive noise during the heating in conventional traction battery heating technologies which use a motor loop to heat the traction battery.

In some embodiments, the method further includes:
sending a charge enable signal and a discharge enable signal to the switch module and the charge-discharge switching module in an alternate manner at a preset frequency, so as to control the action of the switch module and the charge-discharge switching module to form alternately switching charge loop and discharge loop in the charge/discharge circuit.

The charge loop and the discharge loop are formed alternately at the preset frequency, such that the rate of heat production in the power supply module can be accelerated.

In some embodiments, the charge loop and discharge loop that are alternately switched include:
a loop including the upper leg of the switch module, the energy storage module, the second switching circuit, and the power supply module; and
a loop including the lower leg of the switch module, the energy storage module, the first switching circuit, and the power supply module.

The charge loop and the discharge loop are configured to charge and discharge the power supply module, such that the power supply module produces heat.

In some embodiments, the charge-discharge switching module includes a first switching circuit and a second switching circuit that are connected in series; and the switch module includes M phase leg circuits, where each phase leg circuit includes an upper leg and a lower leg that are connected in series; and
the sending a charge/discharge enable signal such that the switch module and the charge-discharge switching module perform an action to form alternately switching charge loop and discharge loop in the charge/discharge circuit includes:
sending a charge enable signal such that all upper legs of the switch module turn on, all lower legs of the switch module turn off, the first switching circuit turns off, and the second switching circuit turns on, so as to form a charge loop including the upper legs of the switch module, the energy storage module, the second switching circuit, and the power supply module; and
sending a discharge enable signal such that all upper legs of the switch module turn off, all lower legs of the switch module turn on, the first switching circuit turns on, and the second switching circuit turns off, so as to form a discharge loop including the lower legs of the switch module, the energy storage module, the first switching circuit, and the power supply module.

The switching between the charge loop and the discharge loop is implemented by controlling the on-off of all the upper legs and all the lower legs of the switch module and the on-off of the first switching circuit and the second switching circuit, such that the alternating current is produced in the charge/discharge circuit, and the alternating current produces heat in the power supply module, thereby heating the power supply module.

In some embodiments, the charge-discharge switching module includes a first switching circuit and a second switching circuit that are connected in series; and the switch module includes M phase leg circuits, where each phase leg circuit includes an upper leg and a lower leg that are connected in series; and
the sending a charge/discharge enable signal such that the switch module and the charge-discharge switching module perform an action to form alternately switching charge loop and discharge loop in the charge/discharge circuit includes:
sending a charge enable signal such that all upper legs of the switch module turn off, all lower legs of the switch module turn on, the first switching circuit turns on, and the second switching circuit turns off, so as to form a charge loop including the lower legs of the switch module, the energy storage module, the first switching circuit, and the power supply module; and
sending a discharge enable signal such that all upper legs of the switch module turn on, all lower legs of the switch module turn off, the first switching circuit turns off, and the second switching circuit turns on, so as to form a discharge loop including the upper legs of the switch module, the energy storage module, the second switching circuit, and the power supply module.

In some embodiments, the charge-discharge switching module includes a first switching circuit and a second switching circuit that are connected in series, where the first switching circuit includes a third diode, a negative electrode of the third diode is connected to a positive electrode of the power supply module, and the second switching circuit includes a third switch; and the switch module includes M phase leg circuits, where each phase leg circuit includes an upper leg and a lower leg that are connected in series; and
the sending a charge/discharge enable signal such that the switch module and the charge-discharge switching module perform an action to form alternately switching charge loop and discharge loop in the charge/discharge circuit includes:
sending a discharge enable signal such that all upper legs of the switch module and the third switch turn on and all lower legs of the switch module turn off, so as to form a discharge loop including the upper legs of the switch module, the energy storage module, the second switching circuit, and the power supply module; and
sending a charge enable signal such that all lower legs of the switch module turn on and all upper legs of the switch module and the third switch turn off, so as to form a charge loop including the lower legs of the switch module, the energy storage module, the first switching circuit, and the power supply module.

The switching between the charge loop and the discharge loop is implemented by controlling the on-off of all the upper legs and all the lower legs of the switch module and the on-off of the third switch. This process requires no active control for the third diode, thereby simplifying the control mode.

In some embodiments, the first switching circuit further includes a fourth switch connected in series between the third diode and the positive electrode of the power supply module; and
the sending a charge/discharge enable signal such that the switch module and the charge-discharge switching module perform an action to form alternately switching charge loop and discharge loop in the charge/discharge circuit includes:
sending a discharge enable signal such that all upper legs of the switch module and the third switch turn on and all lower legs of the switch module and the fourth switch turn off, so as to form a discharge loop including the upper legs of the switch module, the energy storage module, the second switching circuit, and the power supply module; and
sending a charge enable signal such that all lower legs of the switch module and the fourth switch turn on and all upper legs of the switch module and the third switch turn off, so as to form a charge loop including the lower legs of the switch module, the energy storage module, the first switching circuit, and the power supply module.

The switching between the charge loop and the discharge loop is implemented by controlling the on-off of all the upper legs and all the lower legs of the switch module, the on-off of the third switch, and the on-off of the fourth switch. This process requires no active control for the third diode, thereby simplifying the control mode.

In some embodiments, the first switching circuit includes a fifth switch, and the second switching circuit includes a fourth diode, where a positive electrode of the fourth diode is connected to a negative electrode of the power supply module; and
the sending a charge/discharge enable signal such that the switch module and the charge-discharge switching module perform an action to form alternately switching charge loop and discharge loop in the charge/discharge circuit includes:
sending a discharge enable signal such that all lower legs of the switch module and the fifth switch turn on and all upper legs of the switch module turn off, so as to form a discharge loop including the first switching circuit, the energy storage module, the lower legs of the switch module, and the power supply module; and
sending a charge enable signal such that all upper legs of the switch module turn on and all lower legs of the switch module and the fifth switch turn off, so as to form a charge loop including the second switching circuit, the energy storage module, the upper legs of the switch module, and the power supply module.

The switching between the charge loop and the discharge loop is implemented by controlling the on-off of all the upper legs and all the lower legs of the switch module and the on-off of the fifth switch. This process requires no active control for the fourth diode, thereby simplifying the control mode.

In some embodiments, the first switching circuit includes a fifth switch, the second switching circuit includes a fourth diode and a sixth switch, and a positive electrode of the fourth diode is connected to a negative electrode of the power supply module through the sixth switch; and
the sending a charge/discharge enable signal such that the switch module and the charge-discharge switching module perform an action to form alternately switching charge loop and discharge loop in the charge/discharge circuit includes:
sending a discharge enable signal such that all lower legs of the switch module and the fifth switch turn on and all upper legs of the switch module turn off, so as to form a discharge loop including the first switching circuit, the energy storage module, the lower legs of the switch module, and the power supply module; and
sending a charge enable signal such that all upper legs of the switch module and the sixth switch turn on and all lower legs of the switch module and the fifth switch turn off, so as to form a charge loop including the second switching circuit, the energy storage module, the upper legs of the switch module, and the power supply module.

In some embodiments, the switch module includes M phase leg circuits, where each phase leg circuit includes an upper leg and a lower leg that are connected in series; the energy storage module includes a first M-phase motor and a second M-phase motor, where a neutral point of the first M-phase motor is connected to a neutral point of the second M-phase motor; the charge-discharge switching module includes a first switching circuit and a second switching circuit that are connected in series, where the first switching circuit includes M upper legs of M phase leg circuits, and the second switching circuit includes M lower legs of the M phase leg circuits; and
the sending a charge/discharge enable signal such that the switch module and the charge-discharge switching module perform an action to form alternately switching charge loop and discharge loop in the charge/discharge circuit includes:
sending a discharge enable signal such that all upper legs of the switch module and all lower legs of the charge-discharge switching module turn on, so as to form a discharge loop including the power supply module, the upper legs of the switch module, the energy storage module, and the lower legs of the charge-discharge switching module; and
sending a charge enable signal such that all upper legs of the charge-discharge switching module and all lower legs of the switch module turn on, so as to form a charge loop including the power supply module, the lower legs of the switch module, the energy storage module, and the upper legs of the charge-discharge switching module.

As an energy storage component, the second M-phase motor can absorb and store the energy discharged from the energy storage module, and charge the stored energy into the energy storage module after the charge loop is formed, thereby increasing the energy charged into and discharged from the energy storage module.

In some embodiments, the energy storage module includes a first M-phase motor and a second M-phase motor, where a neutral point of the first M-phase motor is connected to a neutral point of the second M-phase motor; the switch module includes M phase leg circuits, where each phase leg circuit includes an upper leg and a lower leg that are connected in series; the charge-discharge switching module includes a first switching circuit and a second switching circuit that are connected in series, where the first switching circuit includes M upper legs of M phase leg circuits, and the second switching circuit includes M lower legs of the M phase leg circuits; and
the sending a charge/discharge enable signal such that the switch module and the charge-discharge switching module perform an action to form alternately switching charge loop and discharge loop in the charge/discharge circuit includes:
sending a discharge enable signal such that all upper legs of the charge-discharge switching module and all lower legs of the switch module turn on, so as to form a discharge loop including the power supply module, the upper legs of the charge-discharge switching module, the energy storage module, and the lower legs of the switch module; and
sending a charge enable signal such that all upper legs of the switch module and all lower legs of the charge-discharge switching module turn on, so as to form a charge loop including the power supply module, the lower legs of the charge-discharge switching module, the energy storage module, and the upper legs of the switch module.

In some embodiments, before the sending a charge/discharge enable signal such that the switch module and the charge-discharge switching module perform an action, the method further includes:
determining a state of charge of the power supply module; and
under the condition that the state of charge is greater than a first preset threshold, performing the step of sending a charge/discharge enable signal such that the switch module and the charge-discharge switching module perform an action.

Under the condition that the state of charge of the power supply module is greater than the first preset threshold, an electric quantity of the power supply module is relatively sufficient. The step of performing an action by the switch module and the charge-discharge switching module in response to the charge/discharge enable signal sent by the control module is executed to form an alternating current, such that the alternating current produces heat in the power supply module, which can improve heating efficiency.

In some embodiments, the method further includes:
under the condition that the power supply module reaches a preset temperature and/or experiences an abnormal temperature rise, sending a charge/discharge stop signal to the switch module, where the charge/discharge stop signal is used for indicating the power supply module to stop charging/discharging.

In some embodiments, the method further includes:
obtaining an operating state of the energy storage module; and
under the condition that the energy storage module is in a non-driving state, sending the charge/discharge enable signal to the switch module.

In some embodiments, the method further includes:
receiving a charge/discharge request, where the charge/discharge request is used for indicating that the power supply module meets a charge/discharge condition.

According to a fourth aspect, this application provides a power apparatus, including the charge/discharge system according to the second aspect, where a power supply module of the charge/discharge system is configured to supply power to the power apparatus.

The power apparatus according to the fourth aspect includes the charge/discharge system provided in the second aspect, the switch module and the charge-discharge switching module in the charge/discharge system can perform an action in response to the charge/discharge enable signal sent by the control module to produce an alternating current in the charge/discharge circuit, such that the alternating current produces heat in the power supply module, thereby heating the power supply module. This can effectively suppress noise caused by motor vibration and resolve the problem that the motor vibrates so much as to produce excessive noise during the heating in conventional traction battery heating technologies which use a motor loop to heat the traction battery.

According to a fifth aspect, this application provides an electronic device, including: a memory, a processor, and a computer program stored in the memory and capable of running on the processor, where when the computer program is executed by the processor, the method according to the third aspect is implemented. The technical solution in the fifth aspect can achieve the beneficial technical effects achieved by the method according to the third aspect.

According to a sixth aspect, this application provides a computer-readable storage medium, where the computer-readable storage medium stores a computer program, and when the computer program is executed by a processor, the method according to the third aspect is implemented. The technical solution in the sixth aspect can achieve the beneficial technical effects achieved by the method according to the third aspect.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred implementations and are not intended to limit this application. In addition, in all the accompanying drawings, same parts are indicated by same reference signs. In the accompanying drawings:
FIG. 1 is a block diagram of a structure of a circuit of a conventional charge/discharge system;
FIG. 2 is a block diagram of a structure of a charge/discharge circuit according to some embodiments of this application;
FIG. 3 is a block diagram of a structure of a charge/discharge circuit according to some embodiments of this application;
FIG. 4 is a circuit diagram of a charge/discharge circuit according to an example of this application;
FIG. 5 is a relation diagram of current and time formed from the circuit shown in FIG. 4;
FIG. 6 is a circuit diagram of a charge/discharge circuit according to an example of this application;
FIG. 7 is a circuit diagram of a charge/discharge circuit according to an example of this application;
FIG. 8(a) is a circuit diagram of a charge/discharge circuit according to an example of this application;
FIG. 8(b) is a circuit diagram of a charge/discharge circuit according to an example of this application;
FIG. 9 is a block diagram of a structure of a charge/discharge system according to some embodiments of this application;
FIG. 10 is a block diagram of a structure of a charge/discharge system according to some embodiments of this application;
FIG. 11 is a block diagram of a structure of a charge/discharge system according to some embodiments of this application;
FIG. 12 is a schematic diagram of a discharge loop of a charge/discharge system according to some embodiments of this application;
FIG. 13 is a relation diagram of current and time formed from the circuit shown in FIG. 12;
FIG. 14 is a schematic diagram of a charge loop of a charge/discharge system according to some embodiments of this application;
FIG. 15 is a schematic diagram of a discharge loop of a charge/discharge system according to some embodiments of this application;
FIG. 16 is a schematic diagram of a charge loop of a charge/discharge system according to some embodiments of this application;
FIG. 17 is a flowchart of a charge/discharge control method according to some embodiments of this application;
FIG. 18 is a flowchart of a charge/discharge control method according to some embodiments of this application;
FIG. 19 is a schematic diagram of a structure of a control circuit of a charge/discharge system according to some embodiments of this application;
FIG. 20 is a block diagram of a structure of an electronic device according to some embodiments of this application; and
FIG. 21 is a schematic diagram of a computer-readable storage medium according to some embodiments of this application.

Reference signs in the specific embodiments are described as follows:
Charge/discharge system 100; power supply module 110; switch module 120; motor winding 130; upper leg switch 121; lower leg switch 122; upper leg switch 123; lower leg switch 124; upper leg switch 125; lower leg switch 126; winding 131 connected to U-phase leg; winding 132 connected to V-phase leg; winding 133 connected to W-phase leg;
charge/discharge system 200; first winding 210; inductor 220; first switch group 230; second switch group 240; power supply module 250; control module 260;
charge/discharge system 300; winding 311; winding 312; winding 313; inductor 321; leg 331; leg 332; leg 333; external leg 341; upper leg 3411; lower leg 3412; upper leg 3311; lower leg 3312; upper leg 3321; lower leg 3322; upper leg 3331; lower leg 3332; upper leg 3411; lower leg 3412; power supply module 350;
charge/discharge system 500; winding 511; winding 512; winding 513; winding 521; winding 522; winding 523; leg 531; leg 532; leg 533; leg 541; leg 542; leg 543; upper leg 5311; lower leg 5312; upper leg 5321; lower leg 5322; upper leg 5331; lower leg 5332; upper leg 5411; lower leg 5412; upper leg 5421; lower leg 5422; upper leg 5431; lower leg 5432;
electronic device 60; processor 600; memory 601; bus 602; communication interface 603; and compact disc 80.

### DESCRIPTION OF EMBODIMENTS

The following describes in detail the embodiments of technical solutions in this application with reference to the accompanying drawings. The following embodiments are merely used to describe technical solutions in this application more explicitly, and therefore they are merely used as examples and do not constitute a limitation to the protection scope of this application.

Unless otherwise defined, all technical and scientific terms used herein shall have the same meanings as commonly understood by those skilled in the art to which this application belongs. The terms used herein are merely intended to describe the specific embodiments but not intended to constitute any limitation on this application. The terms "include", "comprise", and "having" and any other variations thereof in the specification, the claims and the foregoing brief description of drawings of this application are intended to cover a non-exclusive inclusion.

In descriptions of embodiments of this application, the terms "first", "second" and the like are merely intended to distinguish between different objects, and shall not be understood as an indication or implication of relative importance or implicit indication of the number, specific sequence or dominant-subordinate relationship of indicated technical features. In the descriptions of this application, "a plurality of" means at least two unless otherwise specifically stated.

The term "embodiment" described herein means that specific features, structures or characteristics in combination with descriptions of the embodiments may be incorporated in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may combine with another embodiments.

In the descriptions of the embodiments of this application, the term "and/or" in this application describes only an association relationship for describing associated objects and represents that three relationships may exist. For example, A and/or B may represent the following three cases: A alone, both A and B, and B alone. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In descriptions of embodiments of this application, the terms "first", "second", "third", and the like are merely intended to distinguish between different objects, and shall not be understood as an indication or implication of relative importance or implicit indication of the number, specific sequence or dominant-subordinate relationship of indicated technical features. It should also be understood that although the terms "first", "second", "third", and the like are used for distinguishing between different objects, these objects are not restricted by these terms.

In the description of the embodiments of this application, the orientations or positional relationships indicated by the technical terms "center", "longitudinal", "transverse", "length", "width", "thickness", "upper", "lower", "front", "rear", "left", "right", "perpendicular", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the apparatuses or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, any may refer to a direct connection, an indirect connection via an intermediate medium, or an interaction between two elements. Persons of ordinary skill in the art can understand specific meanings of these terms in this application as appropriate to specific situations.

With the development of the times, new energy vehicles have huge market prospects and can effectively promote energy conservation and emission reduction thanks to their advantages such as environmental protection, low noise, and low costs, which is conducive to the development and progress of the society.

Due to the electrochemical characteristics of traction batteries, charging and discharging capacity of the traction batteries is greatly limited in low-temperature environments, which severely affects user experience of vehicles in winter. Therefore, for proper use of traction batteries, it is necessary to heat them up in low-temperature environments.

The traction battery in the embodiments of this application may be a lithium-ion battery, a lithium metal battery, a lead-acid battery, a nickel-cadmium battery, a nickel-metal hydride battery, a lithium-sulfur battery, a lithium-air battery, a sodium-ion battery, or the like. This is not limited herein. In terms of scale, the battery in this embodiment of this application may be a battery cell, or may be a battery module or a battery group. This is not limited herein. In terms of application scenarios, the battery can be used in power apparatuses such as an automobile and a ship. For example, the battery can be used in an electric vehicle to supply power to a motor of the electric vehicle as a power source for the electric vehicle. The battery can also power other electric components in the electric vehicle for supplying power to an in-car air conditioner, an in-car player, or the like.

For ease of description, a traction battery applied to a new energy vehicle (electric vehicle) is described as an example below.

A drive motor and its control system are one of core components of the new energy vehicle, and its drive characteristics determine the main performance indexes of the vehicle. A motor drive system of new energy vehicle mainly includes components such as an electromotor (for example, motor), a power converter, a motor controller (for example, inverter), various detection sensors, and power supply. The motor is a rotating electromagnetic machine whose operations are based on the principle of electromagnetic induction. In the operations, the motor absorbs electric power from an electric system, and outputs mechanical power to a mechanical system.

In order to avoid unnecessary costs of heating the traction battery, the traction battery can be heated by using the motor loop.

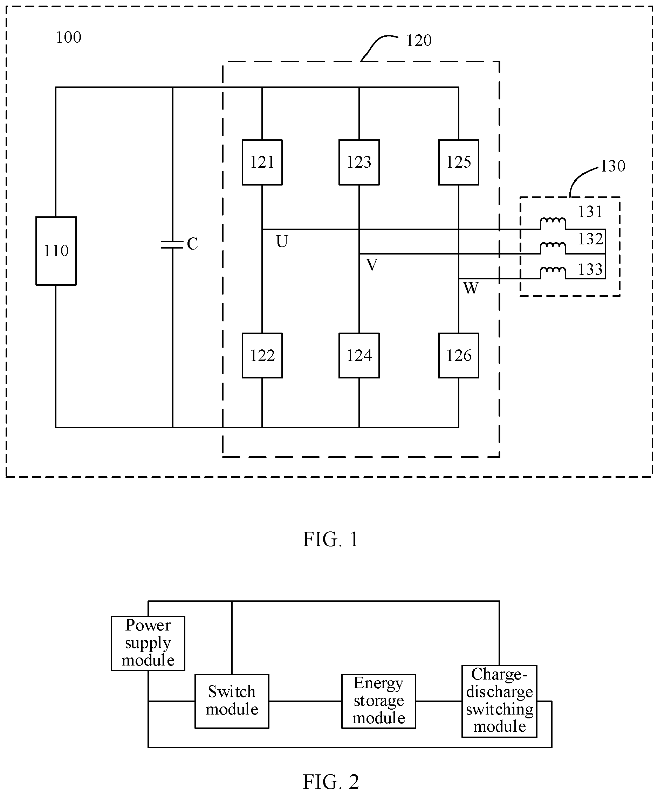

FIG. 1 is a circuit diagram of a conventional charge/discharge system. As shown in FIG. 1, the charge/discharge system 100 may include a power supply module 110, a switch module 120 connected to the power supply module 110, and a motor winding 130 connected to the switch module 120. The charge/discharge system is configured to heat the traction battery, such that the charge/discharge system may also be referred to as a traction battery heating system.

The power supply module 110 may be implemented not only by the traction battery itself, but also by an external power supply module such as a charging pile. For example, the heating energy provided by the external power supply module may be output by an external direct current charger, or output by an external alternating current charger after rectification, which is not specifically limited herein.

The switch module 120 may be implemented by various types of switches. For example, the switch module 120 may be implemented by an inverter in a motor drive system, where the inverter may be implemented by using a leg switch of an insulated gate bipolar power transistor (Insulated Gate Bipolar Transistor, IGBT). Specifically, the number of legs in the inverter is the same as the number of windings in the motor winding 130. For example, the motor winding 130 includes three phase windings, and the inverter includes three phase legs, namely, a U-phase leg, a V-phase leg, and a W-phase leg. Each of the three phase legs has an upper leg and a lower leg, and the upper leg and the lower leg are each provided with a switch unit, to be specific, the switch module 120 includes an upper leg switch 121 and a lower leg switch 122 in the U-phase leg, an upper leg switch 123 and a lower leg switch 124 in the V-phase leg, and an upper leg switch 125 and a lower leg switch 126 in the W-phase leg.

The motor winding 130 may specifically include a winding 131 connected to the U-phase leg, a winding 132 connected to the V-phase leg, and a winding 133 connected to the W-phase leg. One terminal of the winding 131 is connected to a joint of the upper leg and the lower leg in the U-phase leg, one terminal of the winding 132 is connected to a joint of the upper leg and the lower leg in the V-phase leg, and one terminal of the winding 133 is connected to a joint of the upper leg and the lower leg in the W-phase leg. The other terminal of the winding 131, the other terminal of the winding 132, and the other terminal of the winding 133 are connected together.

It should be noted that the motor winding 130 is not limited to a three-phase motor, but may be a six-phase motor or the like, and correspondingly, the switch module 120 may include six phase legs.

In some embodiments, the current may be modulated by controlling the switches in the switch module 120 to periodically turn on and off. For example, the current is modulated by controlling a target upper leg switch and a target lower leg switch in the inverter to periodically turn on and off. In one example, if the target upper leg switch is the upper leg switch 121, the target lower leg switch is the lower leg switch 124 and/or the lower leg switch 126. In another example, if the target upper leg switch is the upper leg switch 123, the target lower leg switch is the lower leg switch 122 and/or the lower leg switch 126. In another example, if the target upper leg switch is the upper leg switch 125, the target lower leg switch is the lower leg switch 122 and/or the lower leg switch 124.

It should be noted that the target upper leg switches and the target lower leg switches in all cycles of periodically turning on and off may be the same or different, which is not limited herein. For example, the upper leg switch 121 and the lower leg switch 124 are controlled to turn on and off in each cycle. For another example, in a first cycle, the upper leg switch 121 and the lower leg switch 124 are controlled to turn on and off; in a second cycle, the upper leg switch 123 and the lower leg switch 122 are controlled to turn on and off; and in a third cycle, the upper leg switch 121, the lower leg switch 124, and the lower leg switch 126 are controlled to turn on and off. In other words, different target upper leg switches and lower leg switches may be controlled in different cycles.

The target upper leg switches and the target lower leg switches are controlled to periodically turn on and off, such that different loops including the power supply module, the target upper leg switch, the target lower leg switch, and the motor windings have different current directions, thereby producing an alternating current. In other words, the power supply module performs charging and discharging alternately.

The target switches to turn on and off include at least one upper leg switch and at least one lower leg switch, where the at least one upper leg switch and the at least one lower leg switch belong to different legs.

With the charge/discharge system shown in FIG. 1, three phase currents flowing through the motor windings are asymmetrical with a high frequency, and therefore there is a problem of excessive noise caused by motor vibration in the process of heating the traction battery by using a motor loop.

Refer to FIG.2. An embodiment of this application provides a charge/discharge circuit, including a power supply module, a switch module, an energy storage module, and a charge-discharge switching module.

The switch module, the charge-discharge switching module, and the power supply module are connected in parallel.

A first terminal of the energy storage module is connected to the switch module, and a second terminal of the energy storage module is connected to the charge-discharge switching module.

The switch module and the charge-discharge switching module are configured to perform an action in response to a charge/discharge enable signal to produce an alternating current in the charge/discharge circuit, where a waveform of the alternating current includes at least one of a triangular waveform, a quasi-triangular waveform, a sinusoidal waveform, and a quasi-sinusoidal waveform.

The quasi-triangular waveform is formed on the basis of waveform change of a triangular wave. The quasi-triangular waveform may be a waveform produced by distortion of a triangular wave, or may be a waveform produced by modulation on a triangular wave. For example, because of the influence of electromagnetic interference and other factors, a waveform of a triangular wave is distorted, and therefore a waveform of a quasi-triangular wave is different from that of a regular triangular wave. With a large error, the quasi-triangular wave and the regular triangular wave have a large difference in waveform, and with a small error, the quasi-triangular wave and the regular triangular wave have a small difference in waveform. The case of waveform distortion may include, for example, occurrence of burrs on a waveform curve, formation of large depressions or bulges on the waveform curve, or the like.

The quasi-sinusoidal waveform is formed on the basis of waveform change of a sinusoidal wave. The quasi-sinusoidal waveform may be a waveform produced by distortion of a sinusoidal wave, or may be a waveform produced by modulation on a sinusoidal wave. For example, because of the influence of electromagnetic interference and other factors, a waveform of a sinusoidal wave is distorted, and therefore a waveform of a quasi-sinusoidal wave is different from that of a regular sinusoidal wave. With a large error, the quasi-sinusoidal wave and the regular sinusoidal wave have a large difference in waveform, and with a small error, the quasi-sinusoidal wave and the regular sinusoidal wave have a small difference in waveform. The case of waveform distortion may include, for example, occurrence of burrs on a waveform curve, formation of large depressions or bulges on the waveform curve, or the like.

The switch module and the charge-discharge switching module can perform an action in response to the charge/discharge enable signal to produce an alternating current in the charge/discharge circuit, such that the alternating current produces heat in the power supply module, thereby heating the power supply module. This can effectively suppress noise caused by motor vibration and resolve the problem that the motor vibrates so much as to produce excessive noise during the heating in conventional traction battery heating technologies which use a motor loop to heat the traction battery.

In some embodiments, the power supply module may include at least one battery group. A capacitor may be connected in parallel to a battery group in the power supply module.

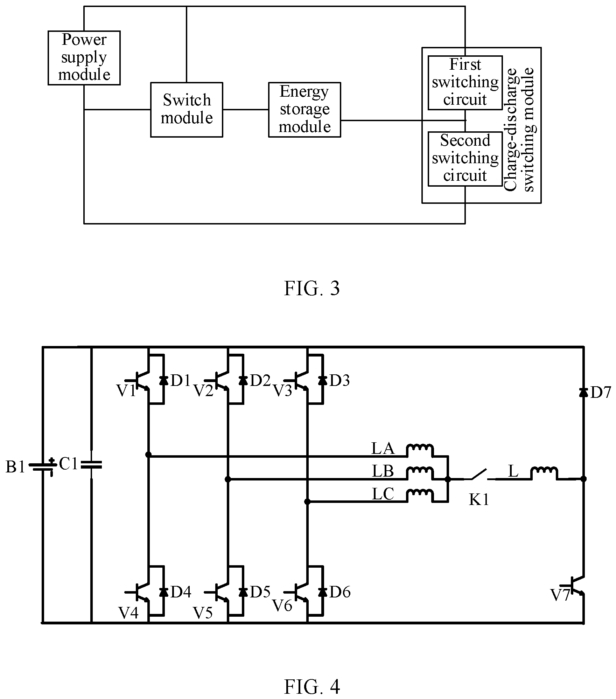

Refer to FIG. 3. In some embodiments, the charge-discharge switching module includes a first switching circuit and a second switching circuit that are connected in series. A joint of the first switching circuit and the second switching circuit is connected to a second terminal of the energy storage module. The first switching circuit and the second switching circuit are configured to turn on or off under the trigger of the charge/discharge enable signal.

The first switching circuit and the second switching circuit can turn on or off under the trigger of the charge/discharge enable signal, and cooperate with the action of the switch module to form a corresponding charge/discharge loop so as to produce an alternating current in the charge/discharge circuit, such that the alternating current produces heat in the power supply module, thereby heating the power supply module.

The charge-discharge switching module includes two switching circuits, namely, the first switching circuit and the second switching circuit, so as to control the charge/discharge circuit to form a charge loop or a discharge loop by using the two switching circuits. Specifically, the first switching circuit, the second switching circuit, and the switch module are controlled to turn on or off, such that alternately switching charge loop and discharge loop are formed between the power supply module and the energy storage module, and an alternating current is produced in the charge/discharge circuit, thereby achieving the effect of heating a battery group in the power supply module.

The joint of the first switching circuit and the second switching circuit is connected to the second terminal of the energy storage module, and the first terminal of the energy storage module is connected to the switch module. The switch module, the first switching circuit, and the second switching circuit are reasonably controlled such that alternating charging and discharging between the power supply module and the energy storage module can be realized, so as to heat the internal resistance of the battery group in the power supply module, achieving the effect of self-heating from the inside of the battery group. In addition, such self-heating from the inside of the battery group achieves higher heating efficiency.

In some embodiments, the energy storage module includes a first M-phase motor. The switch module includes M phase leg circuits, where each phase leg circuit includes an upper leg and a lower leg that are connected in series. M joints between upper legs and lower legs of the M phase leg circuits are connected to M phase windings of the first M-phase motor in one-to-one correspondence. The charge-discharge switching module is connected to a neutral point of the first M-phase motor. M is a value of a positive integer multiple of 3. For example, M may be 3 or 6. Three phase windings of the first M-phase motor are configured to store electrical energy, that is, to absorb and store the electric energy discharged by the power supply module in the discharge circuit. Currents flowing through all phase windings of the first M-phase motor are symmetrical, equal in magnitude, and the same in phase, such that noise produced by motor vibration can be effectively suppressed in the process of heating the power supply module by using a motor loop, and the prior-art problem about excessive noise caused by motor vibration in the process of heating a traction battery by using a motor loop is solved.

In some embodiments, the energy storage module may further include at least one energy storage component, where the at least one energy storage component is connected in series between the second terminal of the energy storage module and the charge-discharge switching module. The at least one energy storage component further increases the electric energy storage capacity of the energy storage module and assists the first M-phase motor to store the electric energy discharged by the power supply module, so as to absorb and store more electric energy discharged by the power supply module in the discharge circuit, increase the charge current for the power supply module in the charge loop, increase the discharge current for the power supply module in the discharge loop, and prolong charge duration of the power supply module being charged and the discharge duration of the power supply module being discharged, thereby improving heating efficiency for the power supply module and shortening heating duration for the power supply module.

In some embodiments, the at least one energy storage component includes an inductor and/or a capacitor connected in series between the second terminal of the energy storage module and the charge-discharge switching module. The inductor or capacitor assists in storing the electric energy discharged by the power supply module to absorb and store more electric energy discharged by the power supply module in the discharge circuit, and in increasing a charge current for the power supply module in the charge process, thus improving heating efficiency.

In some embodiments, the first switching circuit includes a third diode, and the second switching circuit includes a third switch, where a negative electrode of the third diode is connected to a positive electrode of the power supply module. The third diode and the third switch constitute a charge-discharge switching module. With such a simple structure, costs are reduced, no active control for the third diode is required, and a control mode is simplified.

Refer to the example shown in FIG. 4. The charge/discharge circuit includes a traction battery B1, insulated gate bipolar transistors (Insulated Gate Bipolar Transistor, IGBT for short) V1 to V7, freewheel diodes D1 to D7, a relay switch K1, and an inductor L. In the example shown in FIG. 4, the energy storage module includes a three-phase motor, where LA, LB, and LC are three phase windings of the three-phase motor; the first switching circuit includes the diode D7, and the second switching circuit includes the switch V7, where a negative electrode of the diode D7 is connected to the positive electrode of the power supply module; and the power supply module includes the traction battery B1. The charge-discharge switching module includes D7 and V7. The switch module includes three leg circuits. A first leg circuit includes a first upper leg and a first lower leg that are connected to each other, where the first upper leg includes V1 and D1 that are connected in parallel, and the first lower leg includes V4 and D4 that are connected in parallel. A second leg circuit includes a second upper leg and a second lower leg that are connected to each other, where the second upper leg includes V2 and D2 that are connected in parallel, and the second lower leg includes V5 and D5 that are connected in parallel. A third leg circuit includes a third upper leg and a third lower leg that are connected to each other, where the third upper leg includes V3 and D3 that are connected in parallel, and the third lower leg includes V6 and D6 that are connected in parallel. A leg joint of the first upper leg and the first lower leg is connected to LA, a leg joint of the second upper leg and the second lower leg is connected to LB, and a leg joint of the third upper leg and the third lower leg is connected to LC. K1 is connected between L and neutral points of the three phase windings. The neutral points of LA, LB and LC are connected to one terminal of K1, the other terminal of K1 is connected to one terminal of L, and the other terminal of L is connected to a joint of the first switching circuit and the second switching circuit. The negative electrode of D7 is connected to a positive electrode of B1. The example shown in FIG. 4 also includes a capacitor C1 connected to B 1 in parallel. The control module may be a motor controller or another controller. L is used as the preceding energy storage component.

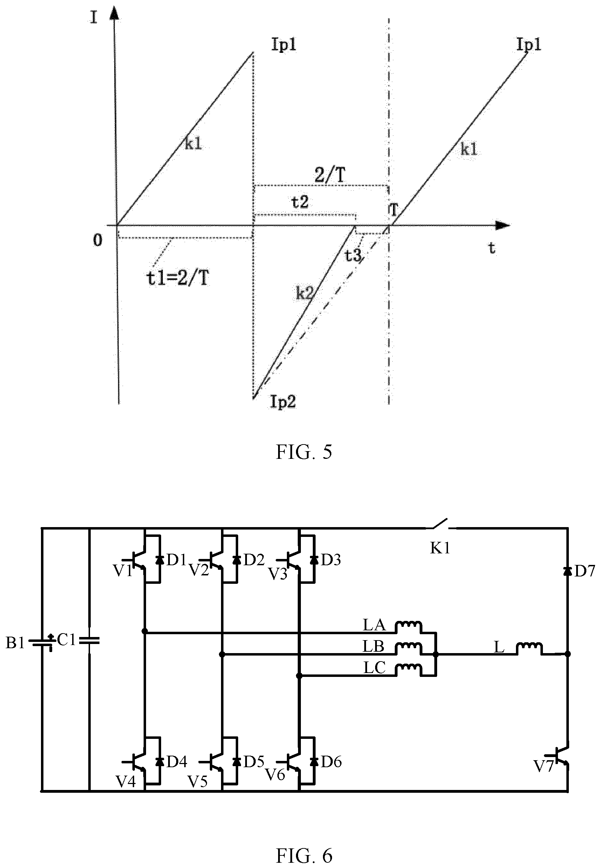

Refer to FIG. 4. In a first stage, V1, V2, V3, and V7 all turn on, and a potential difference across the inductor is equal to a battery voltage minus a diode voltage drop. The voltages across the inductor have the same direction as the current in the inductor. In this case, the inductor stores energy and the current gradually increases to IP1. In a second stage, V1, V2, V3, and V7 all turn off, and a potential difference across the inductor is equal to a battery voltage plus a voltage drop of D4, D5, D6, and D7. The voltages across the inductor are reversed, and a direction of the current in the inductor remains unchanged. In this case, the inductor gradually discharges the energy stored, a direction of the current in a bus bar is negative, and the magnitude of current decreases from IP2 to zero. A relation diagram of current formed and time is shown in FIG. 5.

The circuit structure of this embodiment can save the switch costs. In this embodiment, only one freewheel diode D7 and one triode V7 are used for the fourth leg, which greatly reduces the costs. In addition, the freewheel diode D7 is passively controlled without active control, which simplifies a switch control strategy.

In some embodiments, the first switching circuit further includes a fourth switch, where the fourth switch is connected in series between the third diode and the positive electrode of the power supply module. The fourth switch can make the on/off control mode of the first switching circuit more diversified and flexible, so as to be suitable for forming charge and discharge loops of more different topologies.

Refer to an example shown in FIG. 6. The charge/discharge circuit includes a traction battery B1, a capacitor C1, insulated gate bipolar transistors (Insulated Gate Bipolar Transistor, IGBT for short) V1 to V7, freewheel diodes D1 to D7, a relay switch K1, an inductor L, and three winding inductors LA, LB, and LC of the three-phase motor. In the charge/discharge circuit shown in FIG. 6a, the first switching circuit includes K1 and diode D7 that are connected in series, meaning that K1 is used as the preceding fourth switch and the second switching circuit includes switch V7. The control module may be a motor controller. The circuit shown in FIG. 6 differs from the circuit shown in FIG. 4in that K1 is connected between the positive electrode of B1 and the negative electrode of D7.

In some embodiments, the first switching circuit includes a fifth switch, and the second switching circuit includes a fourth diode, where a positive electrode of the fourth diode is connected to a negative electrode of the power supply module. The fourth diode and the fifth switch constitute a charge-discharge switching module. With such a simple structure, costs are reduced, no active control for the fourth diode is required, and a control mode is simplified.

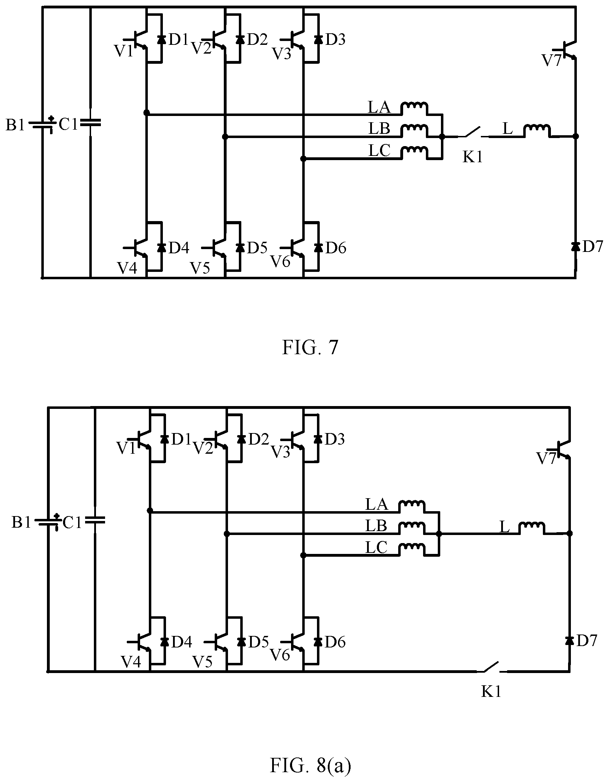

The circuit structure of the charge/discharge circuit provided in the example shown in FIG. 7 differs from that shown in FIG. 4 only in that the first switching circuit includes V7 and that the second switching circuit includes D7 whose positive electrode is connected to the negative electrode of B1.

In some embodiments, the first switching circuit includes a fifth switch, and the second switching circuit includes a sixth switch and a fourth diode that are connected in series, where the sixth switch is connected in series between the fourth diode and the negative electrode of the power supply module. The sixth switch can make the on/off control mode of the second switching circuit more diversified and flexible, so as to be suitable for forming charge and discharge loops of more different topologies.

In a charge/discharge circuit provided in an embodiment shown in FIG. 8(a), a second switching circuit thereof includes switch K1 and diode D7 that are connected in series. The circuit structure shown in FIG. 8(a) differs from the circuit structure shown in FIG. 7 only in that K1 is located between D7 and the negative electrode of B 1.

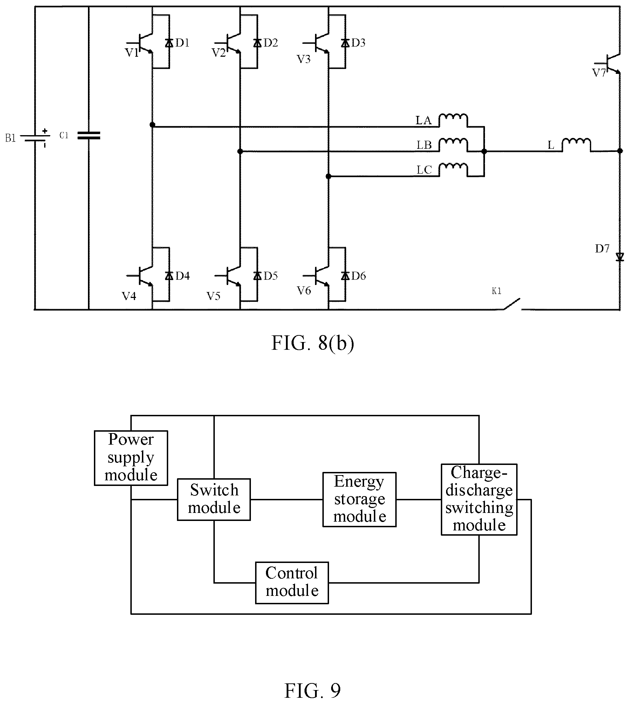

The circuit structure shown in FIG. 8(b) differs from the circuit structure shown in FIG. 8(a) only in that the negative electrode of D7 in the circuit structure shown in FIG. 8(b) is connected to the negative electrode of B1 through K1.

In some embodiments, the first switching circuit includes an upper leg, and the second switching circuit includes a lower leg, where a joint of the upper leg and the lower leg is connected to the second terminal of the energy storage module.

In some embodiments, the upper leg of the first switching circuit may be referred to as a first upper leg including a first switch, and the lower leg of the second switching circuit may be referred to as a first lower leg including a second switch. A joint of the first upper leg and the second lower leg is connected to the second terminal of the energy storage module.

In some embodiments, the first upper leg includes a first switch and a first diode that are connected in parallel, and the first lower leg includes a second switch and a second diode that are connected in parallel.

A negative electrode of the first diode is connected to a positive electrode of the power supply module, a positive electrode of the first diode is connected to a negative electrode of the second diode, and a positive electrode of the second diode is connected to a negative electrode of the first battery group.

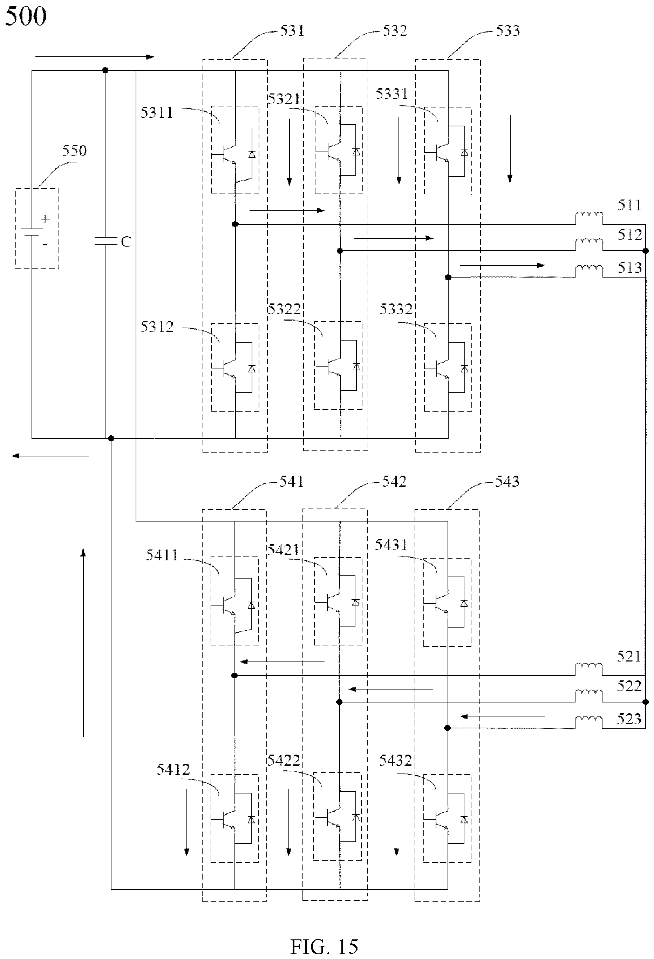

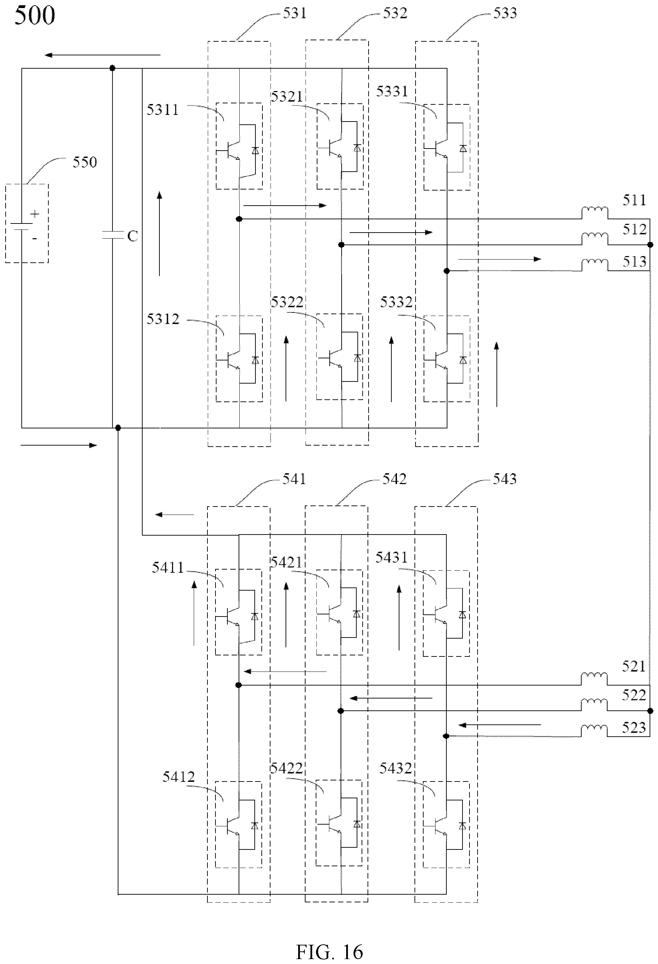

As shown in FIG. 15 and FIG. 16, in some embodiments, the at least one energy storage component includes a second M-phase motor, where the neutral point of the first M-phase motor is connected to a neutral point of the second M-phase motor.

The first switching circuit includes M upper legs of M phase leg circuits, and the second switching circuit includes M lower legs of the M phase leg circuits, where the M upper legs are connected to the M lower legs in one-to-one correspondence.

M joints between upper legs and lower legs of the charge-discharge switching module are connected to M windings of the second M-phase motor in one-to-one correspondence.

The second M-phase motor assists in storing the electric energy discharged by the power supply module to absorb and store more electric energy discharged by the power supply module in the discharge circuit, and in increasing a charge current for the power supply module in the charge process, thus improving heating efficiency.

As shown in FIG. 9, another embodiment of this application provides a charge/discharge system, including a control module and the charge/discharge circuit according to any one of the foregoing embodiments. The control module is configured to send a charge/discharge enable signal to the charge/discharge circuit to control charge/discharge of the power supply module.

In some embodiments, the charge/discharge system further includes a charge apparatus connected to a charge/discharge circuit, where the charge apparatus is configured to charge a battery group in the power supply module through the charge/discharge circuit. The charge apparatus charges the battery group in the power supply module, which can accelerate the heating rate of the battery group of the power supply module.

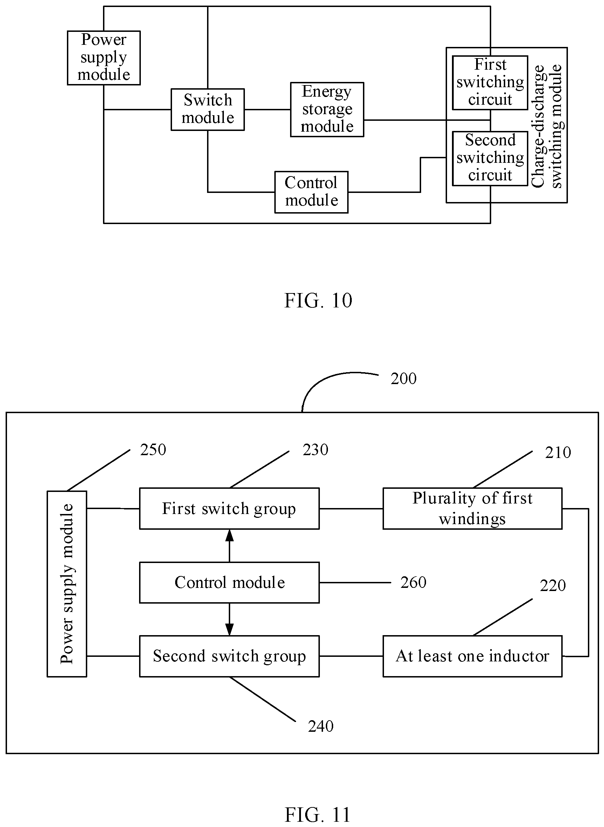

As shown in FIG. 10, in some embodiments, the charge-discharge switching module includes a first switching circuit and a second switching circuit that are connected in series, and the control module is connected to the charge-discharge switching circuit.

The charge/discharge system of this embodiment has the same beneficial technical effects as the charge/discharge circuit of the preceding embodiments.

FIG. 11 is a schematic block diagram of a charge/discharge system 200 according to another embodiment of this application. The charge/discharge system 200 includes a plurality of first windings 210, at least one inductor 220, a first switch group 230, a second switch group 240, a power supply module 250, and a control module 260.

The plurality of first windings 210 may be all the windings of a first motor, where the first motor may be a three-phase motor or a six-phase motor.

Optionally, the at least one inductor 220 may be an external inductor connected to a neutral point of the first motor.

Optionally, the at least one inductor 220 may be at least one winding in a second motor. Further, the at least one inductor 220 may alternatively be all windings in the second motor, where the second motor may be a three-phase motor or a six-phase motor.

The first switch group 230 is connected to the plurality of first windings 210, and the second switch group 240 is connected to the at least one inductor 220. It should be understood that the "connection" may be a direct connection in physical relation or may be a connection implemented through another device.

The first switch group 230 corresponds to the switch module in the preceding embodiments, and the second switch group 240 corresponds to the charge-discharge switching module in the preceding embodiments.

The control module 260 is configured to control on/off states of the first switch group 230 and the second switch group 240 so as to form a loop including the first switch group 230, the plurality of first windings 210, the at least one inductor 220, the second switch group 240, and the power supply module 250, such that a current produces heat in a traction battery to heat the traction battery.

In this embodiment of this application, currents flowing through the plurality of first windings are the same in magnitude and phase.

The control module 260 controls switches in the first switch group 230 and the second switch group 240 to periodically turn on and off, so as to produce an alternating current in the loop including the power supply module 250, the first switch group 230, the second switch group 240, the plurality of first windings 210, and the at least one inductor 220. For example, in a first cycle, the control module 260 controls the switches in the first switch group 230 and the second switch group 240 such that the current flows from the positive electrode to the negative electrode of the power supply module, in other words, a first loop, namely a discharge loop is formed; and in a second cycle, the control module 260 controls the switches in the first switch group 230 and the second switch group 240 such that the current flows from the negative electrode to the positive electrode of the power supply module, in other words, a second loop, namely a charge loop is formed; where the first loop and the second loop are used for causing the current to produce heat inside the traction battery, thereby heating the traction battery.

In addition, the switches in the first switch group 230 and the second switch group 240 periodically turn on and off, that is, the switches in the first switch group 230 and the second switch group 240 alternately turn on and off at a preset frequency.

A magnetomotive force of a single-phase winding is a pulse magnetomotive force steppedly distributed in space and alternating with time according to the change rule of current. Magnetomotive forces of three single-phase windings in the three-phase motor are superimposed so as to obtain a synthetic magnetic field of the three phase windings. Generally, currents flowing into the three phase windings of the three-phase motor during heating are not exactly equal in magnitude, currents flowing through two of the three phase windings is 180° apart from each other, and currents flowing through two of the three phase windings without phase difference are equal in magnitude. This will cause that the currents flowing through the three phase windings of the motor are not symmetrical, and a high current frequency will result in large noise caused by motor vibration in the process of heating the traction battery. In this application, currents flowing into all windings belonging to the first motor are controlled to be the same in magnitude and phase, such that the vibration noise produced when the traction battery is heated by using the first motor loop is effectively suppressed. In addition, the first motor is not allowed to operate, such that the problem of rotor heating in the motor can be solved, thereby prolonging the battery self-heating duration.

Optionally, in this embodiment of this application, the charge/discharge system 200 includes a first motor, at least one inductor, a switch module, a charge-discharge switching module, a control module 260, and a power supply module 250. The switch module includes a first switch group 230, where the first switch group 230 is a first leg group. The charge-discharge switching module includes a second switch group 240, where the second switch group 240 is a second leg group. Each leg in the first leg group and the second leg group includes an upper leg and a lower leg, joints of upper legs and lower legs of all legs in the first leg group are connected to all windings in the first motor in one-to-one correspondence, and joints of upper legs and lower legs of all legs in the second leg group are connected to the at least one inductor in one-to-one correspondence. The first leg group and the second leg group are connected in parallel to the power supply module. To be specific, the first motor includes a plurality of first windings 210, and the plurality of first windings 210 are all windings in the first motor.

The control module 260 is configured to: send a first heating signal to the switch module and the charge-discharge switching module, where the first heating signal is also referred to as a discharge enable signal, and the first heating signal is used for controlling all upper legs in the first leg group to turn on, all lower legs in the first leg group to turn off, all lower legs in the second leg group to turn on, and all upper legs in the second leg group to turn off, so as to form a first loop including all the upper legs in the first leg group, all the windings of the first motor, the at least one inductor, all the lower legs in the second leg group, and the power supply module; and send a second heating signal to the switch module and the charge-discharge switching module, where the second heating signal is also referred to as a charge enable signal, and the second heating signal is used for controlling all lower legs in the first leg group to turn on, all upper legs in the first leg group to turn off, all upper legs in the second leg group to turn on and all lower legs in the second leg group to turn off, so as to form a second loop including all the lower legs in the first leg group, all the windings in the first motor, the at least one inductor, all the upper legs in the second leg group, and the power supply module. The first loop and the second loop are used for causing the current to produce heat in a traction battery to heat the traction battery.

The currents flowing through all the windings in the first motor are the same in magnitude and phase.

The currents flowing into all the windings of the first motor are controlled to be the same in magnitude and phase, such that the vibration noise of the first motor can be effectively suppressed when the loop of the first motor is used to heat the traction battery. In addition, the charge/discharge system provided in this application causes the first motor not to operate, such that the problem of rotor heating in the first motor can be solved, thereby prolonging the battery self-heating duration.

Optionally, in this embodiment of this application, the at least one inductor is an external inductor connected to a neutral point of the first motor. Optionally, the external inductor may also be replaced by an external conductor.

Optionally, in this embodiment of this application, the at least one inductor is all the windings in the second motor, and currents flowing through all the windings in the second motor are the same in magnitude and phase.

The currents flowing into all the windings of the second motor are further controlled to be the same in magnitude and phase, such that the vibration noise of the motors can be effectively suppressed when the loops of the first motor and the second motor are used to heat the traction battery. In addition, the charge/discharge system provided in this application causes the first motor and the second motor not to operate, such that the problem of rotor heating in the motors can be solved, thereby prolonging the battery self-heating duration.

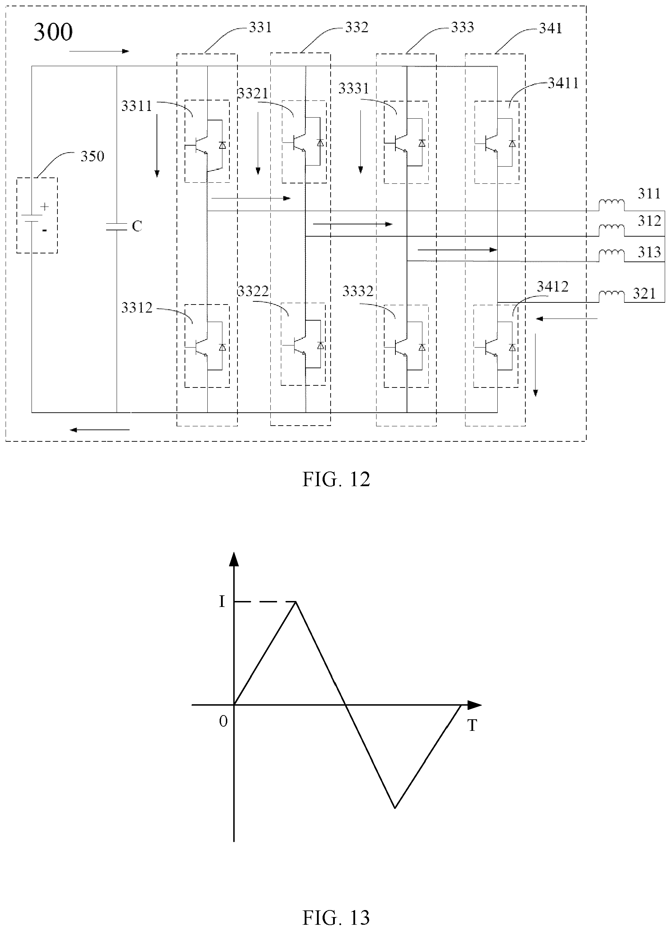

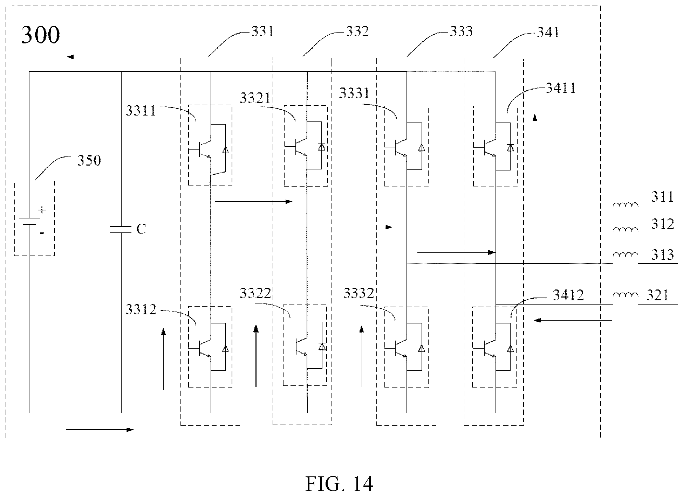

The following describes the circuit diagram of the charge/discharge system 300 provided in the embodiments of this application in detail with reference to FIG. 12 and FIG. 14. As shown in FIG. 12 and 14, the first motor is a three-phase motor, the plurality of first windings are three phase windings in the three-phase motor, namely, a winding 311, a winding 312, and a winding 313, and the at least one inductor is an external inductor 321 connected to a neutral point of the three-phase motor. The first leg group includes a leg 331, a leg 332, and a leg 333. The second switch group includes an external leg 341. In the circuit structures shown in FIG. 3 and FIG. 4, the first switching circuit includes a first upper leg, the second switching circuit includes a first lower leg, and a joint of the first upper leg and the first lower leg is connected to the second terminal of the energy storage module. The first upper leg includes a first switch and a first diode that are connected in parallel, and the first lower leg includes a second switch and a second diode that are connected in parallel. A negative electrode of the first diode is connected to a positive electrode of the power supply module, a positive electrode of the first diode is connected to a negative electrode of the second diode, and a positive electrode of the second diode is connected to a negative electrode of the first battery group. The external leg 341 serves as a charge-discharge switching module. An upper leg 3411 serves as the first upper leg, and a lower leg 3412 serves as the first lower leg.

In some modified embodiments, the first upper leg may include only the first switch and no first diode, and the first lower leg may include only the second switch and no second diode.

Specifically, a joint of the upper leg 3311 and the lower leg 3312 of the leg 331 is connected to one terminal of the winding 311, a joint of the upper leg 3321 and the lower leg 3322 of the leg 332 is connected to one terminal of the winding 312, a joint of the upper leg 3331 and the lower leg 3332 of the leg 333 is connected to one terminal of the winding 313, a joint of the upper leg 3411 and the lower leg 3412 of the external leg 341 is connected to one terminal of the external inductor 321, and another terminal of the winding 311, another terminal of the winding 312, another terminal of the winding 313, and another terminal of the external inductor 321 are connected together.

The power supply module 350, the upper legs 3311 to 3331, the windings 311 to 313, the external inductor 321, and the lower leg 3412 jointly form a discharge loop, as shown in FIG. 12; and similarly, the power supply module 350, the lower legs 3312 to 3332, the windings 311 to 313, the external inductor 321, and the upper leg 3411 jointly form a charge loop, as shown in FIG. 14. Under the control of a control module (not shown in the figure), the charge loop and the discharge loop are periodically alternately switched on.

In the embodiments shown in FIG. 12 and FIG. 14, the currents flowing into the windings 311 to 313 of the first motor are controlled to be the same in magnitude and phase, such that the vibration noise of the motor can be effectively suppressed when the loop of the first motor is used to heat the traction battery. In addition, the charge/discharge system provided in this embodiment of this application causes the first motor not to operate, such that the problem of rotor heating in the motor can be solved, thereby prolonging the battery self-heating duration.

The windings 311 to 313 may serve as input windings and the external inductor 321 may serve as output windings. Alternatively, the windings 311 to 313 may serve as output windings and the external inductor 321 may serve as input windings. Provided that the upper legs of the three phase legs connected to the windings 311 to 313 and the lower legs of the external legs connected to the external inductor 321 all turn on or off while the lower legs of the three phase legs connected to the windings 311 to 313 and the upper legs of the external legs connected to the external inductor all turn on or off, the discharge loop shown in FIG. 12 and the charge loop shown in FIG. 14 can be realized.

Refer to FIG. 12. Under the condition that only a manner of turning on/off switch transistors is used, a waveform of a current flowing through a bus bar is displayed as a triangular waveform, as shown in FIG. 13. The switch transistors preferably turn on, directions of voltages across the inductor change from positive to negative, and the inductor discharges energy. However, the switch transistors turn on, such that the battery can charge the inductor in reverse. Therefore, the current in the bus bar gradually decreases to 0. In the next stage, after the energy of the inductor is completely discharged, the battery charges the inductor, and a direction of the current in the inductor is reversed from that in the previous stage. At this point, the voltage of the inductor is in the same direction as the current, and the inductor stores energy.

Optionally, the external inductor 321 may also be a conductor. In addition, the number of external inductors 321 may not be limited in the embodiments of this application.

Optionally, the first motor may also be a six-phase motor, and the plurality of first windings may be all windings in the six-phase motor. The vibration noise of the motor can be effectively reduced provided that currents flowing through all the windings of the first motor are controlled to be the same in magnitude and phase.

The following describes the circuit diagram of the charge/discharge system 500 provided in the embodiments of this application with reference to FIG. 15 and FIG. 16.

As shown in FIG. 15 and FIG. 16, the first motor is a three-phase motor, and the plurality of first windings are winding 511, winding 512, and winding 513, respectively. The charge/discharge system 500 further includes a second motor. The second motor is also a three-phase motor, and the at least one inductor is winding 521, winding 522, and winding 523 in the second motor. The first leg group includes a leg 531, a leg 532, and a leg 533. The second switch group includes a leg 541, a leg 542, and a leg 543.

Specifically, a joint of the upper leg 5311 and the lower leg 5312 of the leg 531 is connected to one terminal of the winding 511, a joint of the upper leg 5321 and the lower leg 5322 of the leg 532 is connected to one terminal of the winding 512, a joint of the upper leg 5331 and the lower leg 5332 of the leg 533 is connected to one terminal of the winding 513, a joint of the upper leg 5411 and the lower leg 5412 of the external leg 541 is connected to one terminal of the external inductor 521, a joint of the upper leg 5421 and the lower leg 5422 of the external leg 542 is connected to one terminal of the external inductor 522, and a joint of the upper leg 5431 and the lower leg 5432 of the external leg 543 is connected to one terminal of the external inductor 523, and another terminal of the winding 511, another terminal of the winding 512, another terminal of the winding 513, another terminal of the winding 521, another terminal of the winding 522, and another terminal of the winding 523 are connected together.

The power supply module 550, the upper legs 5311 to 5331, the windings 511 to 513, the windings 521 to 523, and the lower legs 5412 to 5432 jointly form a discharge loop, as shown in FIG. 15; and similarly, the power supply module 550, the lower legs 5312 to 5332, the windings 511 to 513, the windings 521 to 523, and the upper legs 5411 to 5431 jointly form a charge loop, as shown in FIG. 16. Under the control of a control module (not shown in the figure), the charge loop and the discharge loop are periodically alternately switched on.

In the embodiments shown in FIG. 15 and FIG. 16, the currents flowing into all the windings 511 to 513 of the first motor are controlled to be the same in magnitude and phase, such that the vibration noise of the first motor can be effectively suppressed in the process of heating the traction battery by using the loop of the first motor. Similarly, the currents flowing into all the windings 521 to 523 of the second motor are controlled to be the same in magnitude and phase, such that the vibration noise of the second motor can be effectively suppressed in the process of heating the traction battery by using the loop of the second motor.

The windings 511 to 513 may serve as input windings and the windings 521 to 523 may serve as output windings. Alternatively, the windings 511 to 513 may serve as output windings and the windings 521 to 523 may serve as input windings. Provided that the upper legs of the three phase legs connected to the windings 511 to 513 and the lower legs of the three phase legs connected to the windings 521 to 523 all turn on or off while the lower legs of the three phase legs connected to the windings 511 to 513 and the upper legs of the three phase legs connected to the windings 521 to 523 all turn on or off, the discharge loop shown in FIG. 15 and the charge loop shown in FIG. 16 can be realized.

Optionally, the first motor may be a six-phase motor and the second motor may be a three-phase motor. The plurality of first windings are all windings in the six-phase motor, and the at least one inductor is all windings in the three-phase motor.

Optionally, the first motor may be a three-phase motor, the second motor is a six-phase motor, the plurality of first windings may be all windings in the three-phase motor, and the at least one inductor is all windings in the six-phase motor.

Optionally, the first motor may be a six-phase motor, the second motor is a six-phase motor, the plurality of first windings may be all windings in the six-phase motor, and the at least one inductor is all windings in the six-phase motor.

Optionally, the control module is configured to send a first heating signal and a second heating signal to the switch module and the charge-discharge switching module in an alternate manner at a preset frequency. That is, the control module starts timing when sending the first heating signal to the switch module and the charge-discharge switching module, and sends the second heating signal to the switch module and the charge-discharge switching module after a predetermined time. Subsequently, the control module starts timing when sending the second heating signal to the switch module and the charge-discharge switching module, and sends the first heating signal to the switch module and the charge-discharge switching module again after the predetermined time. In this way, the control module successively and repeatedly sends the first heating signal and the second heating signal to the switch module and the charge-discharge switching module.

Optionally, in this embodiment of this application, the power supply module is a traction battery, and the control module is further configured to: determine a state of charge SOC of the traction battery; under the condition that the SOC is greater than a first threshold, send a first heating signal and a second heating signal to the switch module and the charge-discharge switching module, in other words, modulating a current flowing through the loop into an alternating current; under the condition that the SOC is less than or equal to the first threshold, send a third heating signal to the switch module and the charge-discharge switching module, where the third heating signal is used for controlling switches in the switch module and the charge-discharge switching module to turn on or off, such that the current direction in the circuit is constant, in other words, a current flowing through the loop is modulated into a direct current. In this way, the heat produced by the first motor is transmitted to the traction battery through a vehicle cooling system to heat the traction battery.

The state of charge (State Of Charge, SOC) refers to a ratio of a remaining capacity at a specific discharge rate to a rated capacity under the same discharge rate. SOC is one of the most important parameters of a battery management system, and is the basis of charge/discharge control strategy and battery balance operation of a whole vehicle. However, due to the structural complexity of lithium battery, its state of charge cannot be directly measured, but can only be estimated according to some external characteristics of the battery, such as battery internal resistance, temperature, current, and other related parameters, by using a relevant characteristic curve or calculation formula.

This embodiment of this application can be applied to a scenario in which a lower temperature traction battery is heated. For example, this embodiment of this application can be applied to a specific scenario in which the temperature of the traction battery is increased by heating the traction battery to reach a temperature at which the battery group can be properly used. Specifically, in this embodiment of this application, when the SOC of the traction battery is greater than the first threshold value, the current flowing through the loop may be modulated into an alternating current, and the alternating current is used to flow through the internal resistance of the traction battery to produce heat for heating the traction battery, which can improve the heating efficiency; and when the SOC of the battery is less than or equal to the first threshold value, that is, when the battery capacity is insufficient, the direct current is used to produce heat in the windings for heating the traction battery, thereby reducing the power consumption and improving the flexibility of the charge/discharge system.

Optionally, the control module may initially control the first switch group and the second switch group, such that the current flowing through the motor loop is a direct current; periodically determine the SOC of the traction battery; when determining that the SOC of the traction battery is greater than the first threshold, control the first switch group and the second switch group such that the current flowing through the motor loop is an alternating current, and use the alternating current to flow though the internal resistance of the traction battery to produce heat for heating the traction battery, thereby improving the heating efficiency.

In some embodiments, the current in the motor winding may be modulated into a direct current or an alternating current by using a space vector pulse width modulation (Space Vector Pulse Width Modulation, SVPWM) algorithm.

It should be noted that when direct currents are applied to the motor windings, a radial electromagnetic force of the motor is reduced, and eddy current loss of the rotor of the motor is reduced, resulting in the reduction of the rotor heat produced. Therefore, when the direct currents are applied to the motor windings, the heat produced by the motor rotor and the electromagnetic vibration noise are reduced.

Optionally, in this embodiment of this application, the control module is specifically configured to: obtain an operating state of the first motor; and when the first motor is in a non-driving state, send a first heating signal and a second heating signal to the switch module and the charge-discharge switching module.

The operating state of the motor is determined such that the traction battery is prevented from being heated to affect the performance of a power apparatus such as a vehicle when the motor is in the driving state.

Further, the control module is specifically configured to send the first heating signal and the second heating signal to the switch module and the charge-discharge switching module when the first motor is in a non-driving state and the charge/discharge system has no fault.

It should be noted that in this embodiment of this application, the failure of the battery heating system means that any one of the first motor, the motor controller, the switch module, the charge-discharge switching module, the heat conducting loop, and the like fails. The failure of the heat conducting loop includes but is not limited to the damage of an interworking valve and deficiency of a medium in the heat conducting loop.

Optionally, gear position information and motor rotation speed information may be obtained to determine whether the first motor is in a driving state or a non-driving state. Specifically, when it is determined that the gear is at position P currently and the vehicle speed is 0, it indicates that the first motor is in a non-driving state; and when it is determined that the gear is not at position P currently or the vehicle speed is not 0, it indicates that the first motor is in a driving state.

Determination is performed based on the gear position information and the motor rotation speed information, such that the heating signal is not sent to the first motor until both of the conditions are met, so as to prevent the traction battery from being heated to affect the performance of the vehicle when the vehicle is in a normal driving state.

Optionally, in this embodiment of this application, the control module is further configured to receive a heating request sent by the battery management system BMS, where the heating request is used for indicating that the traction battery meets a heating condition.

The heating request sent by the BMS is received, such that the control module can heat the traction battery in a timely manner, so as to avoid affecting the use of the power apparatus such as the vehicle.

Optionally, in this embodiment of this application, the control module is further configured to send a stop-heating signal to the switch module and the charge-discharge switching module when the traction battery reaches a preset temperature or experiences an abnormal temperature rise, where the stop-heating signal may control the switch module and the charge-discharge switching module such that a loop including the power supply module, the switch module, the charge-discharge switching module, all the windings in the first motor, and the at least one inductor is not formed, thereby stopping heating the traction battery.

Optionally, in this embodiment of this application, the control module may include a vehicle control unit (Vehicle control unit, VCU) and/or a motor controller.

Optionally, when the VCU receives the heating request sent by the BMS, the VCU may send a control signal to the motor controller, where the control signal is used for indicating the traction battery to be heated, to be specific, the control signal is used for indicating the motor controller to send the heating signal to the switch module and the charge-discharge switching module. For example, after receiving the control signal sent by the VCU, the motor controller may send a first heating signal to the switch module and the charge-discharge switching module, where the first heating signal is used for controlling the switch module and the charge-discharge switching module such that a first loop including the power supply module, the switch module, the charge-discharge switching module, all the windings in the first motor, and the at least one inductor is formed; after a predetermined time, the motor controller sends a second heating signal to the switch module and the charge-discharge switching module, where the second heating signal is used for controlling the switch module and the charge-discharge switching module such that a second loop including the power supply module, the switch module, the charge-discharge switching module, all the windings in the first motor, and the at least one inductor is formed. Currents in the first loop and the second loop are in opposite directions, and the currents sequentially flow in from all the windings in the first motor and then flow out from the at least one inductor.

Optionally, the charge/discharge system shown in FIG. 12 to FIG. 16 further includes a capacitor C connected in parallel to the power supply module, where the capacitor C mainly functions to stabilize the voltage and filter out clutter.

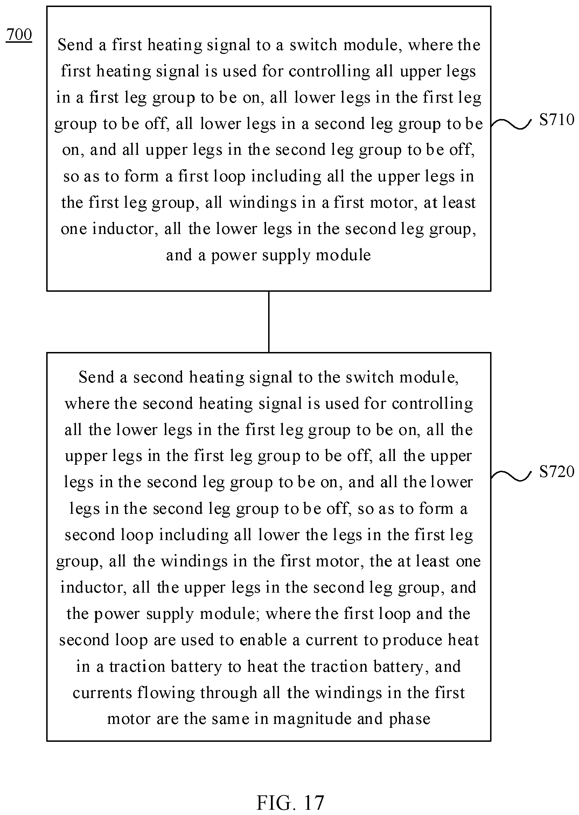

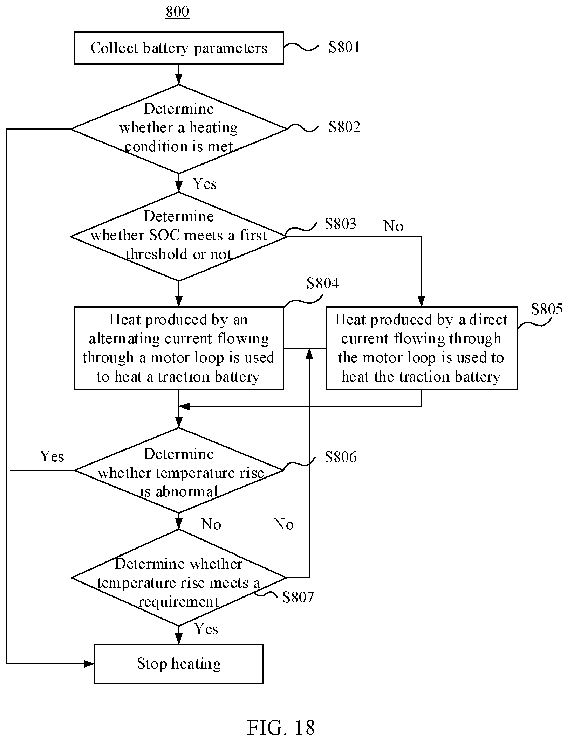

The foregoing has described the charge/discharge system of the embodiments of this application in detail, and the following describes the charge/discharge control method of the embodiments of this application in detail with reference to FIG. 17 and FIG. 18. The technical features described in the apparatus embodiment are applicable to the following method embodiment.

FIG. 17 is a schematic block diagram of a charge/discharge control method 700 according to an embodiment of this application. The charge/discharge system is any of the charge/discharge systems described above. The control method 700 may be performed by a control module in a charge/discharge system, for example, a VCU and/or a motor controller. The control method 700 includes the following steps.

S710: Send a first heating signal to a switch module and a charge-discharge switching module, where the first heating signal is used for controlling all upper legs in a first leg group to turn on, all lower legs in the first leg group to turn off, all lower legs in a second leg group to turn on, and all upper legs in the second leg group to turn off, so as to form a first loop including all the upper legs in the first leg group, all windings in a first motor, at least one inductor, all the lower legs in the second leg group, and a power supply module.

S720: Send a second heating signal to the switch module and the charge-discharge switching module, where the second heating signal is used for controlling all the lower legs in the first leg group to turn on, all the upper legs in the first leg group to turn off, all the upper legs in the second leg group to turn on, and all the lower legs in the second leg group to turn off, so as to form a second loop including all the lower legs in the first leg group, all the windings in the first motor, the at least one inductor, all the upper legs in the second leg group, and the power supply module.

The first loop and the second loop are used to cause a current to produce heat in a traction battery to heat the traction battery, and the currents flowing through all the windings in the first motor are the same in magnitude and phase.

Optionally, in this embodiment of this application, the first motor is a three-phase motor.

Optionally, in this embodiment of this application, the at least one inductor is an external inductor connected to a neutral point of the first motor.

Optionally, in this embodiment of this application, the at least one inductor may be at least one winding in a second motor.

Optionally, in this embodiment of this application, the charge/discharge system further includes a second motor, the at least one inductor is all the windings in the second motor, and currents flowing through all the windings in the second motor are the same in magnitude and phase.

Optionally, in this embodiment of this application, under the condition of determining that a traction battery meets a heating condition, the VCU may send a control signal to the motor controller, where the control signal is used for indicating the traction battery to be heated; and the motor controller sends a first heating signal to the switch module and the charge-discharge switching module, where the first heating signal is used for controlling all upper legs in a first leg group, all windings in a first motor, at least one inductor, all lower legs in a second leg group, and a power supply module to form a first loop; and the motor controller sends a second heating signal to the switch module and the charge-discharge switching module at a predetermined time after sending the first heating signal, where the second heating signal is used for controlling all lower legs in the first leg group, all windings in the first motor, the at least one inductor, all upper legs in the second leg group, and the power supply module to form a second loop.

Optionally, in this embodiment of this application, the sending a first heating signal and a second heating signal to a switch module and a charge-discharge switching module includes: sending a first heating signal and a second heating signal to the switch module and the charge-discharge switching module in an alternate manner at a preset frequency, meaning that the first loop and the second loop are formed in an alternate manner.

Optionally, in this embodiment of this application, the power supply module is a traction battery, and the sending a first heating signal and a second heating signal to a switch module and a charge-discharge switching module includes: determining a state of charge SOC of the traction battery; and under the condition that the SOC is greater than a first threshold, sending the first heating signal and the second heating signal to the switch module and the charge-discharge switching module.

Optionally, in this embodiment of this application, the sending a first heating signal and a second heating signal to a switch module and a charge-discharge switching module includes: obtaining an operating state of the first motor; and when the first motor is in a non-driving state, sending the first heating signal and the second heating signal to the switch module and the charge-discharge switching module.

Optionally, in this embodiment of this application, the control method further includes: under the condition that the traction battery reaches a preset temperature or experiences an abnormal temperature rise, sending a stop-heating signal to the switch module and the charge-discharge switching module.

The following describes the charge/discharge control method according to this embodiment of this application in detail by using the charge/discharge system 300 shown in FIG. 12 and FIG. 14 and the charge/discharge system 500 shown in FIG. 15 and FIG. 16 as examples, separately. FIG. 18 is a schematic flowchart of a control method 800. As shown in FIG. 18, the control method 800 includes the following steps.

S801: A BMS collects battery parameters such as a temperature, an SOC, a voltage signal, and a current signal of a battery pack.

S802: The BMS determines, according to the battery parameters, whether a heating condition is met, and if the heating condition is met, send a corresponding heating request to the VCU according to the SOC, for example, sending an electrical power required to heat to a preset temperature to the VCU.

S803: The BMS or VCU determines whether the SOC of the battery is greater than a first threshold.

S804: If the SOC is greater than the first threshold, heat produced by an alternating current flowing through a motor loop is used to heat the traction battery.

S805: If the SOC is less than or equal to the first threshold, heat produced by a direct current flowing through the motor loop is used to heat the traction battery.

After S804, the VCU reads a current operating state of the first motor.

For example, if the first motor is in a driving state (that is, an operating state), the VCU sends a driving signal to a motor controller. In this case, the motor controller sends periodic drive signals to the switch module and the charge-discharge switching module to control the upper legs and lower legs of the legs 331 to 333 and the leg 341 to turn on and off, thereby realizing the current inverting control of the traction battery. If the first motor is in a non-driving state, the VCU sends a control signal to a motor controller. In this case, the motor controller sends a first heating signal and a second heating signal to the switch module and the charge-discharge switching module, to control the upper legs of the legs 331 to 533, the lower leg of the leg 341, the lower legs of the legs 331 to 533, and the upper leg of the leg 341 to all turn on and off in an alternate manner.

Specifically, when the upper legs 3311, 3321, and 3331 of the legs 331 to 333 and the lower leg 3412 of the leg 341 turn on, and the lower legs 3312, 3322, and 3332 of the legs 331 to 333 and the upper leg 3411 of the leg 341 turn off, the battery 350 discharges, the discharge loop is as follows: 350(+)→(3311/3321/3331)→(311/312/313)→(321)→(3412)→350(-), and the current state is shown in FIG. 3. When the lower legs 3312, 3322, and 3332 of the legs 331 to 333 and the upper leg 3411 of the leg 341 turn on, and the upper legs 3311, 3321, and 3331 of the legs 331 to 333 and the lower leg 3412 of the leg 341 turn off, the battery 350 is charged, the charge loop is as follows: 350(-)→(3312/3322/3332)→(311/312/313)→(321)→(3411)→350(+), and the current state is shown in FIG. 14.

For another example, if the first motor is in a driving state (that is, an operating state), the VCU sends a driving signal to a motor controller. In this case, the motor controller controls the upper legs and the lower legs of the legs 541 to 543 to be off, and turns on or off the upper legs and the lower legs of the legs 531 to 533 according to the periodic drive signals sent by the motor controller, thereby realizing the current inverting control of the battery. If the first motor is in a non-driving state, the VCU sends a control signal to a motor controller. In this case, the motor controller sends a first heating signal and a second heating signal to the switch module and the charge-discharge switching module, to control the upper legs of the legs 531 to 533, the lower legs of the legs 541 to 543, the lower legs of the legs 531 to 533, and the upper legs of the legs 541 to 543 to all turn on and off in an alternate manner.

Specifically, when the upper legs 5311, 5321, and 5331 of the legs 531 to 533 and the lower legs 5412, 5422, and 5432 of the legs 541 to 543 turn on, and the lower legs 5312, 5322, and 5332 of the legs 531 to 533 and the upper legs 5411, 5421, and 5431 of the legs 541 to 543 turn off, the battery 550 discharges, the discharge loop is as follows: 550(+)→(5311/5321/5331)→(511/512/513)→(521/522/523)→(5412/5422/5432)→550(-), and the current state is shown in FIG. 6. When the lower legs 5312, 5322, and 5332 of the legs 531 to 533 and the upper legs 5411, 5421, and 5431 of the legs 541 to 543 turn on, and the upper legs 5311, 5321, and 5331 of the legs 531 to 533 and the lower legs 5412, 5422, and 5432 of the legs 541 to 543 turn off, the battery 550 is charged, the charge loop is as follows: 550(-)→(5312/5322/5332)→(511/512/513)→(521/522/523)→(5411/5421/5431)→550(+), and the current state is shown in FIG. 16.

S806: The BMS determines whether a battery group experiences an abnormal temperature rise, and if the battery group experiences an abnormal temperature rise, the BMS sends temperature rise abnormal information to the VCU, and the VCU forwards the temperature rise abnormal information to the motor controller to stop heating.

S807: If the BMS determines that temperature rise is normal in S806, the BMS determines whether the temperature of the battery group meets a requirement, and if the temperature of the battery group meets the requirement, the VCU forwards stop-heating information to the motor controller to stop heating; otherwise, S804/S805 and S806 are repeated.

Produced waveforms of the alternating current vary with magnitudes or frequencies of the charge and discharge currents, and the waveform produced in the charge/discharge circuit of this embodiment of this application may be any one of these waveforms of the alternating current.

In the charge/discharge control method provided in this embodiment, the switch module and the charge-discharge switching module are controlled to form a loop including the power supply module, the switch module, the charge-discharge switching module, motor windings, at least one inductor independent of the motor windings, and the currents flowing into the motor windings are controlled to be the same in magnitude and phase, thereby effectively reducing excessive noises caused by motor vibration in the process of heating the traction battery by using the motor loop.

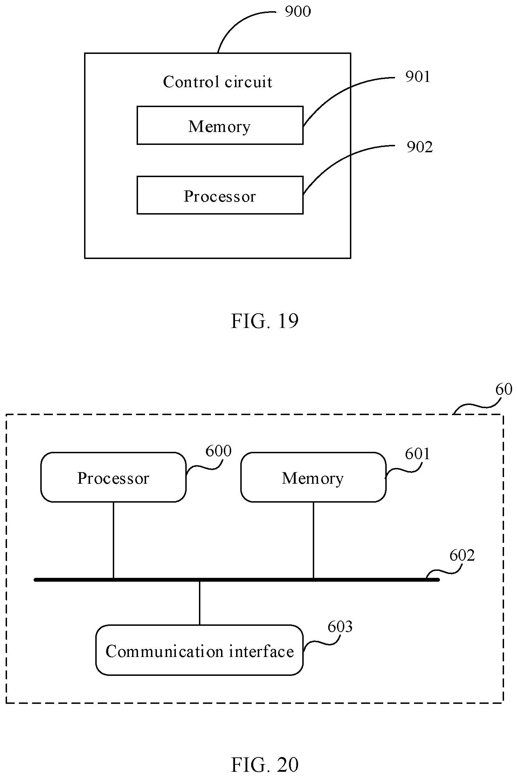

FIG. 19 is a schematic block diagram of a control circuit 900 of a charge/discharge system according to an embodiment of this application. As shown in FIG. 19, the control circuit 900 includes a processor 920; and optionally, the control circuit 900 further includes a memory 910, where the memory 910 is configured to store instructions, and the processor 920 is configured to read the instructions and execute the method of the foregoing embodiments of this application according to the instructions.

Optionally, the processor 920 corresponds to the control module in any one of the charge/discharge systems described above.

Optionally, this embodiment of this application further provides a power apparatus, including a traction battery and any one of the charge/discharge systems described above, where the charge/discharge system is configured to heat the traction battery, and the traction battery supplies power to the power apparatus.

Optionally, another embodiment of this application provides a power apparatus, including the charge/discharge system according to any one of the foregoing embodiments, where a power supply module of the charge/discharge system is configured to supply power to the power apparatus. Optionally, the power apparatus is an electric vehicle.

Another embodiment of this application provides a charge/discharge control method applied to the charge/discharge system according to any one of the foregoing embodiments, where the control method is executed by a control module, and the control method includes:
sending, by the control module, a charge/discharge enable signal such that a switch module and a charge-discharge switching module perform an action to form alternately switching charge loop and discharge loop in the charge/discharge circuit, where the charge loop and the discharge loop produce an alternating current, and a waveform of the alternating current includes at least one of a triangular waveform, a quasi-triangular waveform, a sinusoidal waveform, and a quasi-sinusoidal waveform.

In some embodiments, the method further includes:
sending, by the control module, a charge enable signal and a discharge enable signal to the switch module and the charge-discharge switching module in an alternate manner at a preset frequency, so as to control the action of the switch module and the charge-discharge switching module to form alternately switching charge loop and discharge loop in the charge/discharge circuit.

The charge loop and the discharge loop are formed alternately at the preset frequency, such that the rate of heat production in the power supply module can be accelerated.

In some embodiments, the charge-discharge switching module includes a first switching circuit and a second switching circuit that are connected in series; and the switch module includes M phase leg circuits, where each phase leg circuit includes an upper leg and a lower leg that are connected in series; and
the sending a charge/discharge enable signal such that the switch module and the charge-discharge switching module perform an action to form alternately switching charge loop and discharge loop in the charge/discharge circuit includes:
sending a charge enable signal such that all upper legs of the switch module turn on, all lower legs of the switch module turn off, the first switching circuit turns off, and the second switching circuit turns on, so as to form a charge loop including the upper legs of the switch module, the energy storage module, the second switching circuit, and the power supply module; and
sending a discharge enable signal such that all upper legs of the switch module turn off, all lower legs of the switch module turn on, the first switching circuit turns on, and the second switching circuit turns off, so as to form a discharge loop including the lower legs of the switch module, the energy storage module, the first switching circuit, and the power supply module.

The switching between the charge loop and the discharge loop is implemented by controlling the on-off of all the upper legs and all the lower legs of the switch module and the on-off of the first switching circuit and the second switching circuit, such that the alternating current is produced in the charge/discharge circuit, and the alternating current produces heat in the power supply module, thereby heating the power supply module.

In some embodiments, the charge-discharge switching module includes a first switching circuit and a second switching circuit that are connected in series; and the switch module includes M phase leg circuits, where each phase leg circuit includes an upper leg and a lower leg that are connected in series; and

the sending a charge/discharge enable signal such that the switch module and the charge-discharge switching module perform an action to form alternately switching charge loop and discharge loop in the charge/discharge circuit includes:
sending a charge enable signal such that all upper legs of the switch module turn off, all lower legs of the switch module turn on, the first switching circuit turns on, and the second switching circuit turns off, so as to form a charge loop including the lower legs of the switch module, the energy storage module, the first switching circuit, and the power supply module; and
sending a discharge enable signal such that all upper legs of the switch module turn on, all lower legs of the switch module turn off, the first switching circuit turns off, and the second switching circuit turns on, so as to form a discharge loop including the upper legs of the switch module, the energy storage module, the second switching circuit, and the power supply module.

In some embodiments, the charge-discharge switching module includes a first switching circuit and a second switching circuit that are connected in series, where the first switching circuit includes a third diode, a negative electrode of the third diode is connected to a positive electrode of the power supply module, and the second switching circuit includes a third switch; and the switch module includes M phase leg circuits, where each phase leg circuit includes an upper leg and a lower leg that are connected in series; and
the sending a charge/discharge enable signal such that the switch module and the charge-discharge switching module perform an action to form alternately switching charge loop and discharge loop in the charge/discharge circuit includes:
sending a discharge enable signal such that all upper legs of the switch module and the third switch turn on and all lower legs of the switch module turn off, so as to form a discharge loop including the upper legs of the switch module, the energy storage module, the third switch, and the power supply module; and
sending a charge enable signal such that all lower legs of the switch module turn on and all upper legs of the switch module and the third switch turn off, so as to form a charge loop including the lower legs of the switch module, the energy storage module, the third diode, and the power supply module.

The switching between the charge loop and the discharge loop is implemented by controlling the on-off of all the upper legs and all the lower legs of the switch module and the on-off of the third switch. This process requires no active control for the third diode, thereby simplifying the control mode.

Specifically, referring to the charge/discharge circuit shown in FIG. 4, the charge/discharge control method based on the charge/discharge circuit shown in FIG. 4 includes the following steps.

Step a1: A motor controller itself determines a self-heating condition; and if the self-heating condition of a traction battery is met, the motor controller sends a self-heating command to control K1 to turn on.

Step a2: Turn on V1, V2, V3, and V7, and charge three phase inductors LA, LB, and LC; and in this case, a current path is that: positive electrode of the traction battery B1→V1, V2, V3→three phase inductors LA, LB, LC→K1→inductor L→V7→negative electrode of the traction battery B1.

Step a3: After the inductor is charged for a period of time or after the charging is completed, turn off V1, V2, V3, and V7, turn on V4, V5, and V6, and the inductor charges the traction battery B1; and in this case, a current path is that: three phase inductors LA, LB, LC→K1→inductor L→diode D7→positive electrode of B1→negative electrode of B1→V4, V5, V6.

Step a4: Repeat steps a2 and a3 to complete the charge/discharge cycle of the traction battery B1, so as to implement a self-heating function of the traction battery.

Step a5: The motor controller itself determines whether a self-heating exit condition is met; if the self-heating exit condition is not met, repeat steps a2, a3, and a4; and if the self-heating exit condition is met, turn off V1, V2, V3, V4, V5, V6, and V7, then turn off K1, and exit a heating mode and enter a standby mode.

In some embodiments, the first switching circuit further includes a fourth switch connected in series between the third diode and the positive electrode of the power supply module; and

the sending a charge/discharge enable signal such that the switch module and the charge-discharge switching module perform an action to form alternately switching charge loop and discharge loop in the charge/discharge circuit includes:
sending a discharge enable signal such that all upper legs of the switch module and the third switch turn on and all lower legs of the switch module and the fourth switch turn off, so as to form a discharge loop including the upper legs of the switch module, the energy storage module, the third switch, and the power supply module; and
sending a charge enable signal such that all lower legs of the switch module and the fourth switch turn on and all upper legs of the switch module and the third switch turn off, so as to form a charge loop including the lower legs of the switch module, the energy storage module, the third diode, the fourth switch, and the power supply module.

The switching between the charge loop and the discharge loop is implemented by controlling the on-off of all the upper legs and all the lower legs of the switch module, the on-off of the third switch, and the on-off of the fourth switch. This process requires no active control for the third diode, thereby simplifying the control mode.

Refer to the circuit shown in FIG. 6. The charge/discharge control method based on the charge/discharge circuit shown in FIG. 6 includes the following steps.

Step b1: A motor controller itself determines a self-heating condition; and if the self-heating condition of a battery is met, the motor controller sends a self-heating command to control the switch K1 to turn on.

Step b2: Turn on V1, V2, V3, and V7, and charge three phase inductors LA, LB, and LC; and in this case, a current path is that: positive electrode of the traction battery B1→V1, V2, V3→three phase inductors LA, LB, LC→inductor L→V7→negative electrode of the traction battery B1.

Step b3: After the inductor is charged for a period of time or after the charging is completed, turn off V1, V2, V3, and V7, turn on V4, V5, and V6, and the inductor charges the traction battery B1; and in this case, a current path is that: three phase inductors LA, LB, LC→inductor L→diode D7→K1→positive electrode of B1→negative electrode of B1→V4, V5, V6.

Step b4: Repeat steps b2 and b3 to complete the charge/discharge cycle of the battery, so as to implement a self-heating function of the battery.

Step b5: The motor controller itself determines whether a self-heating exit condition is met; if the self-heating exit condition is not met, repeat steps b2, b3, and b4; and if the self-heating exit condition is met, turn off V1, V2, V3, V4, V5, V6, and V7, then turn off K1, and exit a heating mode and enter a standby mode.

In some embodiments, the first switching circuit includes a fifth switch, and the second switching circuit includes a fourth diode, where a positive electrode of the fourth diode is connected to a negative electrode of the power supply module; and
the sending a charge/discharge enable signal such that the switch module and the charge-discharge switching module perform an action to form alternately switching charge loop and discharge loop in the charge/discharge circuit includes:
sending a discharge enable signal such that all lower legs of the switch module and the fifth switch turn on and all upper legs of the switch module turn off, so as to form a discharge loop including the fifth switch, the energy storage module, the lower legs of the switch module, and the power supply module; and
sending a charge enable signal such that all upper legs of the switch module turn on and all lower legs of the switch module and the fifth switch turn off, so as to form a charge loop including the fourth diode, the energy storage module, the upper legs of the switch module, and the power supply module.

The switching between the charge loop and the discharge loop is implemented by controlling the on-off of all the upper legs and all the lower legs of the switch module and the on-off of the fifth switch. This process requires no active control for the fourth diode, thereby simplifying the control mode.

The charge/discharge circuit shown in FIG. 7 is used for performing charging and discharging to heat the traction battery B1. The charge/discharge control method includes the following steps.

Step c1: A motor controller itself determines a self-heating condition; and if the self-heating condition of a battery is met, the motor controller sends a self-heating command to control the switch K1 to turn on.

Step c2: Turn on V7, V4, V5, and V6, and charge three phase inductors LA, LB and LC; and in this case, a current path is that: positive electrode of the battery-V7-inductor L→switch K1→three phase inductors LA, LB, LC→V4, V5, V6→negative electrode of the battery.

Step c3: After the inductor is charged for a period of time or after the charging is completed, turn off V4, V5, V6, and V7, turn on V1, V2, and V3, and the inductor charges the battery; and in this case, a current path is that: three phase inductors LA, LB, LC→V1, V2, V3→positive electrode of the battery-negative electrode of the battery-diode D7→inductor L→K1.

Step c4: Repeat steps c2 and c3 to complete the charge/discharge cycle of the battery, so as to implement a self-heating function of the battery.

Step c5: The motor controller itself determines whether a self-heating exit condition is met; if the self-heating exit condition is not met, repeats steps c2, c3, and c4; and if the self-heating exit condition is met, turns off V1, V2, V3, V4, V5, V6, and V7, then turns off K1, and exits a heating mode and enters a standby mode.

In some embodiments, the first switching circuit includes a fifth switch, and the second switching circuit includes a fourth diode and a sixth switch, where a positive electrode of the fourth diode is connected to a negative electrode of the power supply module through the sixth switch; and
the sending a charge/discharge enable signal such that the switch module and the charge-discharge switching module perform an action to form alternately switching charge loop and discharge loop in the charge/discharge circuit includes:
sending a discharge enable signal such that all lower legs of the switch module and the fifth switch turn on and all upper legs of the switch module turn off, so as to form a discharge loop including the fifth switch, the energy storage module, the lower legs of the switch module, and the power supply module; and
sending a charge enable signal such that all upper legs of the switch module and the sixth switch turn on and all lower legs of the switch module and the fifth switch turn off, so as to form a charge loop including the sixth switch, the fourth diode, the energy storage module, the upper legs of the switch module, and the power supply module.

The charge/discharge circuit shown in FIG. 8(a) is used for performing charging and discharging to heat the traction battery B1. The charge/discharge control method includes the following steps.

Step d1: A motor controller itself determines a self-heating condition; and if the self-heating condition of a battery is met, the motor controller sends a self-heating command to control the switch K1 to turn on.

Step d2: Turn on V7, V4, V5, and V6, and charge three phase inductors LA, LB and LC; and in this case, a current path is that: positive electrode of the battery→V7→inductor L→three phase inductors LA, LB, LC→V4, V5, V6→negative electrode of the battery.

Step d3: After the inductor is charged for a period of time or after the charging is completed, turn off V4, V5, V6, and V7, turn on V1, V2, and V3, and the inductor charges the battery; and in this case, a current path is that: three phase inductors LA, LB, LC→V1, V2, V3→positive electrode of the battery-negative electrode of the battery→K1→diode D7→inductor L.

Step d4: Repeat steps d2 and d3 to complete the charge/discharge cycle of the battery, so as to implement a self-heating function of the battery.

Step d5: The motor controller itself determines whether a self-heating exit condition is met; if the self-heating exit condition is not met, repeats steps d2, d3, and d4; and if the self-heating exit condition is met, turns off V1, V2, V3, V4, V5, V6, and V7, then turns off K1, and exits a heating mode and enters a standby mode.

When the charge/discharge circuit shown in FIG. 8(b) is used to heat the traction battery B1, step d2 is replaced with step d'2: turn on V4, V5, V6, and K1, turn off V7, and charge three phase inductors LA, LB, and LC; and in this case, a current path is that: positive electrode of the battery→V1, V2, V3→three phase inductors LA, LB, and LC→inductor L→D7→K1→negative electrode of the battery.

Step d3 is replaced with step d'3: After the inductor is charged for a period of time or after the charging is completed, turn off V4, V5, V6, and K1, turn on V1, V2, V3, and V7, and the inductor charges the battery; and in this case, a current path is that: three phase inductors LA, LB, LC→inductor L→V7→positive electrode of the battery-negative electrode of the battery-V4, V5, V6.

In some embodiments, the energy storage module includes a first M-phase motor; the switch module includes M phase leg circuits, where each phase leg circuit includes an upper leg and a lower leg that are connected in series; the charge/discharge circuit further includes a second M-phase motor connected in series between a second terminal of the energy storage module and the charge-discharge switching module; the charge-discharge switching module includes a first switching circuit and a second switching circuit that are connected in series, where the first switching circuit includes M upper legs of M phase leg circuits, and the second switching circuit includes M lower legs of the M phase leg circuits; and
the sending a charge/discharge enable signal such that the switch module and the charge-discharge switching module perform an action to form alternately switching charge loop and discharge loop in the charge/discharge circuit includes:
sending a discharge enable signal such that all upper legs of the switch module and all lower legs of the charge-discharge switching module turn on, so as to form a discharge loop including the power supply module, the upper legs of the switch module, the first M-phase motor, the second M-phase motor, and the lower legs of the charge-discharge switching module; and
sending a charge enable signal such that all upper legs of the charge-discharge switching module and all lower legs of the switch module turn on, so as to form a charge loop including the power supply module, the lower legs of the switch module, the first M-phase motor, the second M-phase motor, and the upper legs of the charge-discharge switching module.

As an energy storage component, the second M-phase motor can absorb and store the energy discharged from the energy storage module, and charge the stored energy into the energy storage module after the charge loop is formed, thereby increasing the energy charged into and discharged from the energy storage module.

In some embodiments, the energy storage module includes a first M-phase motor; the switch module includes M phase leg circuits, where each phase leg circuit includes an upper leg and a lower leg that are connected in series; the charge/discharge circuit further includes a second M-phase motor connected in series between a second terminal of the energy storage module and the charge-discharge switching module; the charge-discharge switching module includes a first switching circuit and a second switching circuit that are connected in series, where the first switching circuit includes M upper legs of M phase leg circuits, and the second switching circuit includes M lower legs of the M phase leg circuits; and
the sending a charge/discharge enable signal such that the switch module and the charge-discharge switching module perform an action to form alternately switching charge loop and discharge loop in the charge/discharge circuit includes:
sending a discharge enable signal such that all upper legs of the charge-discharge switching module and all lower legs of the switch module turn on, so as to form a discharge loop including the power supply module, the upper legs of the charge-discharge switching module, the second M-phase motor, the first M-phase motor, and the lower legs of the switch module; and
sending a charge enable signal such that all upper legs of the switch module and all lower legs of the charge-discharge switching module turn on, so as to form a charge loop including the power supply module, the lower legs of the charge-discharge switching module, the second M-phase motor, the first M-phase motor, and the upper legs of the switch module.

Another embodiment of this application provides an electronic device, including a memory, a processor, and a computer program stored in the memory and capable of running on the processor, where the program is executed by the processor so as to implement the foregoing method according to any one of the foregoing embodiments.

As shown in FIG. 20, the electronic device 60 may include a processor 600, a memory 601, a bus 602, and a communication interface 603. The processor 600, the communication interface 603, and the memory 601 are connected through the bus 602. The memory 601 stores a computer program executable on the processor 600, and when the computer program is executed by the processor 600, the processor 600 executes the method provided in any one of the foregoing embodiments of this application.

The memory 601 may include a high-speed random access memory (RAM: Random Access Memory), or may further include a nonvolatile memory (non-volatile memory), for example, at least one magnetic disk storage. A communication connection between this system network element and at least one other network element is implemented by using the at least one network interface 603 (which may be a wired interface or a wireless interface). The Internet, a wide area network, a local area network, a metropolitan area network, and the like may be used.

The bus 602 may be an ISA bus, a PCI bus, an EISA bus, or the like. The bus may be classified into an address bus, a data bus, a control bus, or the like. The memory 601 is configured to store a program. The processor 600 executes the program after receiving an executable instruction. The method disclosed in any one of the foregoing embodiments of this application may be applied to the processor 600 or implemented by the processor 600.

The processor 600 may be an integrated circuit chip, having a signal processing capability. During implementation, the steps of the foregoing method may be completed by hardware integrated logic circuits in the processor 600 or instructions in the form of software. The processor 600 may be a general-purpose processor, including a central processing unit (Central Processing Unit, CPU for short) and a network processor (Network Processor, NP for short); or may be a digital signal processor (DSP), an application-specific integrated circuit (ASIC), a field programmable gate arrays (FPGA) or another programmable logic device, a separate gate or transistor logic device, or a separate hardware component. The processor 600 can implement or perform the methods, steps, and logical block diagrams that are disclosed in the embodiments of this application. The general-purpose processor may be a microprocessor, or the processor may also be any conventional processor or the like. The steps of the methods disclosed with reference to the embodiments of this application may be directly implemented by a hardware decoding processor, or may be implemented by a combination of hardware and software modules in a decoding processor. The software module may be located in a storage medium mature in the art, such as a random access memory, a flash memory, a read-only memory, a programmable read-only memory or electrically erasable programmable memory, or a register. The storage medium is located in the memory 601, and the processor 600 fetches information in the memory 601, and completes the steps of the foregoing method in combination with its hardware.

The electronic device provided in this embodiment of this application is of the same inventive idea as the method provided in the embodiments of this application and has the same beneficial effects as the method adopted, operated, or implemented.

An embodiment of this application further provides a readable storage medium for storing a computer program, where the computer program is used for performing the methods of the foregoing embodiments of this application.

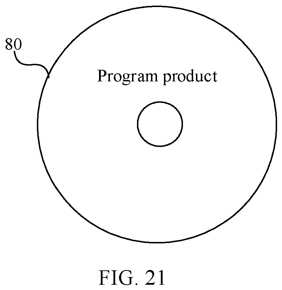

Refer to FIG. 21. A computer-readable storage medium shown in the figure is an optical disc 80 on which a computer program (that is, a program product) is stored, where when the computer program is executed by a processor, the method according to any one of the foregoing embodiments is implemented.

It should be noted that examples of the computer-readable storage medium may also include, but are not limited to, a phase-change memory (PRAM), a static random access memory (SRAM), a dynamic random access memory (DRAM), other types of random access memories (RAM), a read-only memory (ROM), an electrically erasable programmable read-only memory (EEPROM), a flash memory, or other optical and magnetic storage media, which are not described herein.

The computer-readable storage medium provided in the foregoing embodiment of this application has the same inventive idea as the method provided in the embodiments of this application and has the same beneficial effects as the method adopted, operated, or implemented by an application program stored on the computer-readable storage medium.

Persons of ordinary skill in the art may realize that units and algorithm steps of various examples described with reference to the embodiments disclosed in this specification can be implemented by using electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the apparatus embodiment described above is merely an example. For example, the unit division is merely logical function division, and there may be another division manner in actual implementation. For example, a plurality of units or components may be combined or may be integrated into another system, or some characteristics may be ignored or not performed. In addition, the displayed or discussed mutual couplings or direct couplings or communication connections may be implemented by using some interfaces. The indirect couplings or communication connections between apparatuses or units may be implemented in electrical, mechanical, or other forms.

The units described as separate parts may or may not be physically separated, and the parts displayed as units may or may not be physical units, may be located in one position, or may be distributed on a plurality of network units. Some or all of the units may be selected based on an actual requirement, to achieve the objectives of the solutions in the embodiments.

In addition, function units in the embodiments of this application may be integrated into one processing unit, or each of the units may exist alone physically, or two or more units may be integrated into one unit.

When functions are implemented in a form of a software functional unit and sold or used as an independent product, the functions may be stored in a computer-readable storage medium. Based on such an understanding, the technical solutions of the application substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the steps of the method in each embodiment of the application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

In conclusion, it should be noted that the above examples are merely intended for describing the technical solutions of this application but not for limiting this application. Although this application is described in detail with reference to the foregoing examples, persons of ordinary skill in the art should understand that they may still make modifications to the technical solutions described in the foregoing examples or make equivalent replacements to some or all technical features thereof without departing from the scope of the technical solutions of the examples of this application. They should all be covered in the scope of claims and summary in this application. In particular, as long as there is no structural conflict, the various technical features mentioned in the embodiments can be combined in any manner. This application is not limited to the specific embodiments disclosed in this specification, but includes all technical solutions falling within the scope of the claims.

## Claims

1. A charge/discharge circuit, **characterized by** comprising a power supply module, a switch module, an energy storage module, and a charge-discharge switching module, wherein
the switch module, the charge-discharge switching module, and the power supply module are connected in parallel;
a first terminal of the energy storage module is connected to the switch module, and a second terminal of the energy storage module is connected to the charge-discharge switching module; and
the switch module and the charge-discharge switching module are configured to perform an action in response to a charge/discharge enable signal to produce an alternating current in the charge/discharge circuit, wherein a waveform of the alternating current comprises at least one of a triangular waveform, a quasi-triangular waveform, a sinusoidal waveform, and a quasi-sinusoidal waveform.

2. The charge/discharge circuit according to claim 1, **characterized in that**
the charge-discharge switching module comprises a first switching circuit and a second switching circuit that are connected in series, wherein
a joint of the first switching circuit and the second switching circuit is connected to the second terminal of the energy storage module; and
the first switching circuit and the second switching circuit are configured to turn on or off according to the charge/discharge enable signal.

3. The charge/discharge circuit according to claim 2, **characterized in that** the first switching circuit comprises an upper leg, and the second switching circuit comprises a lower leg; wherein
a joint of the upper leg and the lower leg is connected to the second terminal of the energy storage module.

4. The charge/discharge circuit according to claim 3, **characterized in that** the upper leg comprises a first switch, and the lower leg comprises a second switch; or
the upper leg comprises a first switch and a first diode that are connected in parallel, and the lower leg comprises a second switch and a second diode that are connected in parallel; wherein
a negative electrode of the first diode is connected to a positive electrode of the power supply module, a positive electrode of the first diode is connected to a negative electrode of the second diode, and a positive electrode of the second diode is connected to a negative electrode of the first battery group.

5. The charge/discharge circuit according to claim 2, **characterized in that** the first switching circuit comprises a third diode, and the second switching circuit comprises a third switch, wherein a negative electrode of the third diode is connected to a positive electrode of the power supply module.

6. The charge/discharge circuit according to claim 5, **characterized in that** the first switching circuit further comprises a fourth switch, wherein the fourth switch is connected in series between the third diode and the positive electrode of the power supply module.

7. The charge/discharge circuit according to claim 2, **characterized in that** the first switching circuit comprises a fifth switch, and the second switching circuit comprises a fourth diode, wherein a positive electrode of the fourth diode is connected to a negative electrode of the power supply module.

8. The charge/discharge circuit according to claim 7, **characterized in that** the second switching circuit further comprises a sixth switch, wherein the sixth switch is connected in series between the fourth diode and the negative electrode of the power supply module.

9. The charge/discharge circuit according to claim 2, **characterized in that** the first switching circuit comprises a fifth switch, and the second switching circuit comprises a fourth diode and a sixth switch, wherein a negative electrode of the fourth diode is connected to a negative electrode of the power supply module through the sixth switch.

10. The charge/discharge circuit according to any one of claims 1 to 9, **characterized in that**
the energy storage module comprises a first M-phase motor;
the switch module comprises M phase leg circuits, wherein each phase leg circuit comprises an upper leg and a lower leg that are connected in series;
M joints between upper legs and lower legs of the M phase leg circuits are connected to M phase windings of the first M-phase motor in one-to-one correspondence; and
the charge-discharge switching module is connected to a neutral point of the first M-phase motor.

11. The charge/discharge circuit according to claim 10, **characterized in that** the energy storage module further comprises at least one energy storage component connected in series between the neutral point of the first M-phase motor and the charge-discharge switching module.

12. The charge/discharge circuit according to claim 11, **characterized in that** the at least one energy storage component comprises a second M-phase motor, wherein the neutral point of the first M-phase motor is connected to a neutral point of the second M-phase motor;
the first switching circuit comprises M upper legs of M phase leg circuits, and the second switching circuit comprises M lower legs of the M phase leg circuits, wherein the M upper legs are connected to the M lower legs in one-to-one correspondence; and
M joints between upper legs and lower legs of the charge-discharge switching module are connected to M windings of the second M-phase motor in one-to-one correspondence.

13. The charge/discharge circuit according to claim 11 or 12, **characterized in that** the at least one energy storage component comprises an inductor and/or a capacitor connected in series between the neutral point of the first M-phase motor and the charge-discharge switching module.

14. The charge/discharge circuit according to any one of claims 1 to 13, **characterized in that** the power supply module comprises at least one battery group.

15. The charge/discharge circuit according to claim 14, **characterized in that** a capacitor is connected in parallel to a battery group in the power supply module.

16. The charge/discharge circuit according to any one of claims 1 to 13, **characterized in that** a capacitor is connected in parallel to the charge-discharge switching module.

17. A charge/discharge system, **characterized by** comprising a control module and the charge/discharge circuit according to any one of claims 1 to 16, wherein
the control module is configured to send a charge/discharge enable signal to the charge/discharge circuit to control charge/discharge of the power supply module.

18. The charge/discharge system according to claim 17, **characterized in that** the charge/discharge system further comprises a charge apparatus connected to the charge/discharge circuit, wherein
the charge apparatus is configured to charge a battery group in the power supply module through the charge/discharge circuit.

19. A charge/discharge control method, applied to the charge/discharge system according to claim 17 or 18, **characterized in that** the method comprises:
sending a charge/discharge enable signal such that the switch module and the charge-discharge switching module perform an action to form alternately switching charge loop and discharge loop in the charge/discharge circuit, wherein the charge loop and the discharge loop produce an alternating current, and a waveform of the alternating current comprises at least one of a triangular waveform, a quasi-triangular waveform, a sinusoidal waveform, and a quasi-sinusoidal waveform.

20. The method according to claim 19, **characterized in that** the method further comprises:
sending a charge enable signal and a discharge enable signal to the switch module and the charge-discharge switching module in an alternate manner at a preset frequency, so as to control the action of the switch module and the charge-discharge switching module to form alternately switching charge loop and discharge loop in the charge/discharge circuit.

21. The method according to claim 19 or 20, **characterized in that** the alternately switching charge loop and discharge loop comprise:
a loop including the upper leg of the switch module, the energy storage module, the second switching circuit, and the power supply module; and
a loop including the lower leg of the switch module, the energy storage module, the first switching circuit, and the power supply module.

22. The method according to claim 21, **characterized in that** the charge-discharge switching module comprises a first switching circuit and a second switching circuit that are connected in series; and the switch module comprises M phase leg circuits, wherein each phase leg circuit comprises an upper leg and a lower leg that are connected in series; and
the sending a charge/discharge enable signal such that the switch module and the charge-discharge switching module perform an action to form alternately switching charge loop and discharge loop in the charge/discharge circuit comprises:
sending a charge enable signal such that all upper legs of the switch module turn on, all lower legs of the switch module turn off, the first switching circuit turns off, and the second switching circuit turns on, so as to form a charge loop including the upper legs of the switch module, the energy storage module, the second switching circuit, and the power supply module; and
sending a discharge enable signal such that all upper legs of the switch module turn off, all lower legs of the switch module turn on, the first switching circuit turns on, and the second switching circuit turns off, so as to form a discharge loop including the lower legs of the switch module, the energy storage module, the first switching circuit, and the power supply module.

23. The method according to claim 21, **characterized in that** the charge-discharge switching module comprises a first switching circuit and a second switching circuit that are connected in series; and the switch module comprises M phase leg circuits, wherein each phase leg circuit comprises an upper leg and a lower leg that are connected in series; and
the sending a charge/discharge enable signal such that the switch module and the charge-discharge switching module perform an action to form alternately switching charge loop and discharge loop in the charge/discharge circuit comprises:
sending a charge enable signal such that all upper legs of the switch module turn off, all lower legs of the switch module turn on, the first switching circuit turns on, and the second switching circuit turns off, so as to form a charge loop including the lower legs of the switch module, the energy storage module, the first switching circuit, and the power supply module; and
sending a discharge enable signal such that all upper legs of the switch module turn on, all lower legs of the switch module turn off, the first switching circuit turns off, and the second switching circuit turns on, so as to form a discharge loop including the upper legs of the switch module, the energy storage module, the second switching circuit, and the power supply module.

24. The method according to claim 21, **characterized in that** the charge-discharge switching module comprises a first switching circuit and a second switching circuit that are connected in series, wherein the first switching circuit comprises a third diode, a negative electrode of the third diode is connected to a positive electrode of the power supply module, and the second switching circuit comprises a third switch; and the switch module comprises M phase leg circuits, wherein each phase leg circuit comprises an upper leg and a lower leg that are connected in series; and
the sending a charge/discharge enable signal such that the switch module and the charge-discharge switching module perform an action to form alternately switching charge loop and discharge loop in the charge/discharge circuit comprises:
sending a discharge enable signal such that all upper legs of the switch module and the third switch turn on and all lower legs of the switch module turn off, so as to form a discharge loop including the upper legs of the switch module, the energy storage module, the second switching circuit, and the power supply module; and
sending a charge enable signal such that all lower legs of the switch module turn on and all upper legs of the switch module and the third switch turn off, so as to form a charge loop including the lower legs of the switch module, the energy storage module, the first switching circuit, and the power supply module.

25. The method according to claim 24, **characterized in that** the first switching circuit further comprises a fourth switch connected in series between the third diode and the positive electrode of the power supply module; and
the sending a charge/discharge enable signal such that the switch module and the charge-discharge switching module perform an action to form alternately switching charge loop and discharge loop in the charge/discharge circuit comprises:
sending a discharge enable signal such that all upper legs of the switch module and the third switch turn on and all lower legs of the switch module and the fourth switch turn off, so as to form a discharge loop including the upper legs of the switch module, the energy storage module, the second switching circuit, and the power supply module; and
sending a charge enable signal such that all lower legs of the switch module and the fourth switch turn on and all upper legs of the switch module and the third switch turn off, so as to form a charge loop including the lower legs of the switch module, the energy storage module, the first switching circuit, and the power supply module.

26. The method according to claim 21, **characterized in that** the first switching circuit comprises a fifth switch, and the second switching circuit comprises a fourth diode, wherein a positive electrode of the fourth diode is connected to a negative electrode of the power supply module; and
the sending a charge/discharge enable signal such that the switch module and the charge-discharge switching module perform an action to form alternately switching charge loop and discharge loop in the charge/discharge circuit comprises:
sending a discharge enable signal such that all lower legs of the switch module and the fifth switch turn on and all upper legs of the switch module turn off, so as to form a discharge loop including the first switching circuit, the energy storage module, the lower legs of the switch module, and the power supply module; and
sending a charge enable signal such that all upper legs of the switch module turn on and all lower legs of the switch module and the fifth switch turn off, so as to form a charge loop including the second switching circuit, the energy storage module, the upper legs of the switch module, and the power supply module.

27. The method according to claim 21, **characterized in that** the first switching circuit comprises a fifth switch, and the second switching circuit comprises a fourth diode and a sixth switch, wherein a positive electrode of the fourth diode is connected to a negative electrode of the power supply module through the sixth switch; and
the sending a charge/discharge enable signal such that the switch module and the charge-discharge switching module perform an action to form alternately switching charge loop and discharge loop in the charge/discharge circuit comprises:
sending a discharge enable signal such that all lower legs of the switch module and the fifth switch turn on and all upper legs of the switch module turn off, so as to form a discharge loop including the first switching circuit, the energy storage module, the lower legs of the switch module, and the power supply module; and
sending a charge enable signal such that all upper legs of the switch module and the sixth switch turn on and all lower legs of the switch module and the fifth switch turn off, so as to form a charge loop including the second switching circuit, the energy storage module, the upper legs of the switch module, and the power supply module.

28. The method according to claim 21, **characterized in that** the switch module comprises M phase leg circuits, wherein each phase leg circuit comprises an upper leg and a lower leg that are connected in series; the energy storage module comprises a first M-phase motor and a second M-phase motor, wherein a neutral point of the first M-phase motor is connected to a neutral point of the second M-phase motor; the charge-discharge switching module comprises a first switching circuit and a second switching circuit that are connected in series, wherein the first switching circuit comprises M upper legs of M phase leg circuits, and the second switching circuit comprises M lower legs of the M phase leg circuits; and
the sending a charge/discharge enable signal such that the switch module and the charge-discharge switching module perform an action to form alternately switching charge loop and discharge loop in the charge/discharge circuit comprises:
sending a discharge enable signal such that all upper legs of the switch module and all lower legs of the charge-discharge switching module turn on, so as to form a discharge loop including the power supply module, the upper legs of the switch module, the energy storage module, and the lower legs of the charge-discharge switching module; and
sending a charge enable signal such that all upper legs of the charge-discharge switching module and all lower legs of the switch module turn on, so as to form a charge loop including the power supply module, the lower legs of the switch module, the energy storage module, and the upper legs of the charge-discharge switching module.

29. The method according to claim 21, **characterized in that** the energy storage module comprises a first M-phase motor and a second M-phase motor, wherein a neutral point of the first M-phase motor is connected to a neutral point of the second M-phase motor; the switch module comprises M phase leg circuits, wherein each phase leg circuit comprises an upper leg and a lower leg that are connected in series; the charge-discharge switching module comprises a first switching circuit and a second switching circuit that are connected in series, wherein the first switching circuit comprises M upper legs of M phase leg circuits, and the second switching circuit comprises M lower legs of the M phase leg circuits; and
the sending a charge/discharge enable signal such that the switch module and the charge-discharge switching module perform an action to form alternately switching charge loop and discharge loop in the charge/discharge circuit comprises:
sending a discharge enable signal such that all upper legs of the charge-discharge switching module and all lower legs of the switch module turn on, so as to form a discharge loop including the power supply module, the upper legs of the charge-discharge switching module, the energy storage module, and the lower legs of the switch module; and
sending a charge enable signal such that all upper legs of the switch module and all lower legs of the charge-discharge switching module turn on, so as to form a charge loop including the power supply module, the lower legs of the charge-discharge switching module, the energy storage module, and the upper legs of the switch module.

30. The method according to claim 21, **characterized in that** before the sending a charge/discharge enable signal such that the switch module and the charge-discharge switching module perform an action, the method further comprises:
determining a state of charge of the power supply module; and
under the condition that the state of charge is greater than a first preset threshold, performing the step of sending a charge/discharge enable signal such that the switch module and the charge-discharge switching module perform an action.

31. The method according to claim 21, **characterized in that** the method further comprises:
under the condition that the power supply module reaches a preset temperature and/or experiences an abnormal temperature rise, sending a charge/discharge stop signal to the switch module, wherein the charge/discharge stop signal is used for indicating the power supply module to stop charging/discharging.

32. The method according to claim 21, **characterized in that** the method further comprises:
obtaining an operating state of the energy storage module; and
under the condition that the energy storage module is in a non-driving state, sending the charge/discharge enable signal to the switch module.

33. The method according to claim 21, **characterized in that** the method further comprises:
receiving a charge/discharge request, wherein the charge/discharge request is used for indicating that the power supply module meets a charge/discharge condition.

34. A power apparatus, **characterized by** comprising the charge/discharge system according to claim 18 or 19, wherein a power supply module of the charge/discharge system is configured to supply power to the power apparatus.

35. An electronic device, **characterized by** comprising a memory, a processor, and a computer program stored in the memory and capable of running on the processor, wherein the processor executes the program to implement the method according to any one of claims 21 to 33.

36. A computer readable memory, **characterized in that** the computer readable memory stores a computer program, and when the program is executed by a processor to implement the method according to any one of claims 21 to 33.
